# EUROPEAN PATENT SPECIFICATION

(11) **EP 2 575 447 B1**
(45) Date of publication and mention of the grant of the patent: **01.07.2015**
(21) Application number: 11728913.2
(22) Date of filing: 26.05.2011
(51) Int. Cl.: A01N 25/04, A01N 25/08, A01N 31/06, A01N 37/40, A01N 37/44, A01N 37/52, A01N 43/22, A01N 47/02, A01N 51/00, A01N 57/12, A01N 57/14, A01N 57/16, A01N 65/00

(54) **LIQUID COMPOSITIONS COMPRISING A SUSTAINED RELEASE SYSTEM FOR INSECTICIDES**
FLÜSSIGE ZUSAMMENSETZUNGEN ENTHALTEND EIN SYSTEM ZUR ANHALTENDEN FREISETZUNG EINES INSEKTIZIDS
COMPOSITION LIQUIDE CONTENANT UNE SYSTÈME DE LIBÉRATION PROLONGÉE D'UN INSECTICIDE

(30) Priority: 19.08.2010 GB 201013871; 27.05.2010 GB 201008873
(43) Date of publication of application: 10.04.2013
(73) Proprietor: Exosect Limited, Colden Common Winchester SO21 1TH (GB)
(72) Inventor: STORM, Clare, Gillian, Hants S021 1TH (GB); HUGGETT, Nicola, Jane, Hants S021 1TH (GB)
(74) Representative: Andrews, Paul David
(86) International application number: PCT/GB2011/000812
(87) International publication number: WO 2011/148144

(56) References cited:
- EP-A1- 0 018 119
- WO-A1-97/07676
- WO-A1-97/33472
- WO-A2-2008/062221
- WO-A2-2010/031508
- DE-A1- 19 906 491
- GB-A- 2 268 676
- R. M. HOLLINGWORTH: 'Chemistry, Biological Activity, and Uses of Formamidine Pesticides' ENVIRONMENTAL HEALTH PERSPECTIVES vol. 14, 01 April 1976, pages 57 - 69, XP055097566 DOI: 10.2307/3428363 ISSN: 0091-6765

## Description

The present invention relates to liquid formulations for controlling arthropod infestations. In particular, the present invention relates to the provision of liquid formulations that comprise electret particles carrying chemicals that display activity against arthropods such as insects and arachnid species, methods of producing such liquid formulations and uses thereof.

Arthropod infestation of crops, of other arthropods and their environs such as social insects e.g. bees and their hives, of animals, including human beings, of man-made environments like food storage facilities such as grain and pulse stores, farms, housings for animals, and other structures, is the cause of major economic losses worldwide.

Many means of treating arthropod infestation are practised worldwide. It is a constant battle to keep one step ahead of arthropod evolution and/or to maintain or improve arthropod controlling activities where the use of chemicals over time indicates that arthropod species are developing resistance.

A problem associated with the conventional use of chemical agents provided in liquid form against arthropods in the field is that while the chemical agents provided may be effective for short periods of time after application, over longer periods of time, the level of activity tends to drop off. As a result, the user has to apply chemicals more frequently in order to maintain control over arthropod infestation. This in turn means that the environs to which the chemicals are applied will receive high chemical loads often and this may have an adverse effect on the environment, and in particular on animals such as mammals, including humans, as well as other kinds such as birds, amphibians, and beneficial arthropods such as bees, aphid-eating ladybirds, spiders and butterflies.

A further problem associated with the conventional application of chemicals against arthropods on crops or on animals is that when solutions in the form of sprays, mists, washes, baths and the like are applied, losses to the environment tend to be high because active agents may be washed off through the action of rain or of irrigation equipment, and a high proportion of the active chemical is lost to the environment. This in itself leads to chemical loads to the environment which may be further destructive to domesticated and wild animals, amphibians, wild birds and the like.

Dry powder formulations of compounds having activity against arthropods are rarely applied to crops because of difficulties in achieving an even application to the crop, environmental contamination, and worker safety.

The ability to spray particles comprising chemicals that are active against arthropods wherein the particles are comprised in a liquid onto crops or onto animals or to environs where animals frequent is considered desirable since it would enable workers to use conventional chemical spray equipment, would maximize evenness of application, reduce the chemical load to the environment, and minimize health risks to workers.

It has now been found that electret particles comprising chemicals that are active against arthropods can be provided to arthropod-containing environments in a liquid carrier. Such electret particles are capable of adhering to the surfaces of plants, or where appropriate, the surfaces of animals, and in both instances, preferentially adhere to the cuticle of target arthropods. Such electrets release chemicals slowly and therefore repeat applications are not required as often as with conventional liquid applications of arthropod targeted chemicals. As a consequence, the level of chemical that enters the environment is correspondingly lower. Furthermore, by applying electrets comprising chemicals that are active against arthropods in the form of liquid formulations to the surfaces of eukaryotic organisms that are infested by arthropods, such as plants, animals, and arthropods beneficial to man, the amount of active compound that may be absorbed by such surfaces, such as leaves, cuticle (in the case of arthropods beneficial to man), and skin (in the case of mammals or birds), is reduced, and the efficacy of delivery of active compounds to target arthropods is enhanced.

WO2008/062221 relates to the provision of a compact and does not teach the provision of liquid formulations containing electret particles made of waxes. WO2010/031508 relates to insecticidal wax dispersions that are not designed for use as a liquid formulation for spraying onto eukaryotic surfaces but are employed only in the form of a solid, combustible dough in the field. DE 19906491 relates to the melting of solid wax and a solid wax emulsifier at high temperature forming a melt. WO97/33472 relates to the provision of particles of a complex construction that comprise an inert, porous, highly absorbent substrate in association with a pesticide that may be encapsulated inside a wax coating.

There exists a need to overcome or at least reduce the drawbacks of conventional methods of treating arthropod infestations in the field. This and other objects will become apparent from the following description and examples.

As a first aspect of the invention there is provided a liquid formulation for controlling arthropod infestation that comprises the features set out in claim 1.

The liquid formulation of the invention may be formulated as an aqueous formulation or as an oleaginous formulation, depending on design. Aqueous formulations may include surfactants selected from commercially available surfactants such as Libsorb, Silwet L77, Tween 80, Torpedo II, Newmans T80, Fortune, Guard, Rhino, Biopower, and the like. Of these surfactants, Libsorb is the most preferred.

Oleaginous formulations, that is to say oil-based formulations, may contain any oil suitable for use in the invention which may be selected from petroleum oils, such as paraffin oil, summer spray oils and winter spray oils known in the art, and vegetable oils such as rapeseed oil, soybean oil, sunflower oil, palm oil and the like. The oil formulations of the invention contain electret particles as described hereinbelow and these in turn may be admixed with flow agents such as hydrophilic precipitated silicas, for example Sipernat 383 DS, Sipernat 320, EXP 4350, and Sipernat D-17 and the like. Such free-flowing agents may be dispersed in oils, for example, for anti-foaming purposes.

For the purposes of the present invention, "electrets" are materials that maintain a permanent dielectric polarisation, or bulk charge, rather than a surface electrostatic charge. The electret particles are hydrophobic particles selected froms carnauba wax, beeswax, Chinese wax, shellac wax, spermaceti wax, candelilla wax, castor wax, ouricury wax and rice bran wax. These are hard waxes having a melting point of ≥ 50 °C, more preferably ≥ 60 °C, and most preferably ≥ 70 °C. Such waxes typically display a high enthalpy of lattice energy during melt. The electret particles have a volume mean diameter of 10 to 40µm, preferably from 10 to 30µm or 10 to 15µm.

Liquid formulations or compositions of the invention comprise electret particles that once delivered to target surfaces are capable of adhering thereto, as the aqueous element of the composition evaporates or, in the case of an oleaginous element, the oil disperses. Target eukaryotic cell-containing surfaces include plant surfaces such as leaves, stems, and flowers, and when applied to animals, target surfaces include the fur, hair, feathers, skin, cuticle or other surface as appropriate, depending on design. As a result of the electret particles being applied to and adhering to the target surfaces of the animal(preferentially adhering to the pest arthropod cuticle when applied to non-arthropod animals), the chemical agent has a longer residence time on the target surface than conventionally applied pesticidal treatments because it leaches out of the electret particle at a slow rate.

The liquid formulations or compositions of the invention should be effective in controlling populations of plant infesting or animal infesting arthropods as alluded to herein. The chemicals of use in the invention must be capable of acting on the infesting arthropod species and once placed in contact with it, be capable of killing it or at least of rendering it dysfunctional with respect to its being able to eat and/or reproduce. Thus, liquid compositions of the invention are capable of controlling populations of plant- or animal-infesting arthropods, typically by reducing the population size over time.

Additionally, the particles of liquid formulations or compositions of the invention may contain other components such as additives selected from UV blockers such as beta-carotene or p-amino benzoic acid, colouring agents such as optical brighteners and commercially available colouring agents such as food colouring agents, plasticisers such as glycerine or soy oil, antimicrobials such as potassium sorbate, nitrates, nitrites, propylene oxide and the like, antioxidants such as vitamin E, butylated hydroxyl anisole (BHA), butylated hydroxytoluene (BHT), and other antioxidants that may be present, or mixtures thereof. The skilled artisan will appreciate that the selection of such commonly included additives will be made depending on end purpose, and perceived need.

Suitable chemicals of use in the present invention include those of conventionally applied organic chemicals that may be encapsulated within the electret particles of the invention, and which do not deleteriously affect the ability of the chemical-loaded particle to adhere to the cuticle of the target arthropod or to the target eukaryotic cell-containing surface, for example the plant surface or animal surface of a recipient plant or animal. Examples of suitable chemicals of use in the invention may be selected from the pyrethroids, such as α-cypermethrin, λ-cyhalothrin, [cyano-(3-phenoxyphenyl)-methyl] 3-(2,2-dibromoethenyl)-2,2-dimethyl-cyclopropane-1-carboxylate (deltamethrin), and τ-fluvalinate, the organophosphates such as chlorpyriphos (diethoxy-sulfanylidene-(3,5,6-trichloropyridin-2-yl)oxy-I^{5}-phosphane), malathion (diethyl 2 dimethoxyphosphino - thioyl-sulfanylbutanedioate), coumaphos (3-chloro-7-diethoxyphosphinothioyloxy-4-methylcoumarin), and stirifos ([(E)-2-chloro-1-(2,4,5-trichlorophenyl)ethenyl] dimethyl phosphate) the carbamates such as amitraz (N-(2,4-dimethylphenyl)-N-[(2,4-dimethylphenyl)iminomethyl]-N-methylmethanimidamide), the spinosans such as spinosad (Dow Agrichemical, France), the gamma amino butyric acid (GABA) inhibitors such as fipronil (5-amino-1-[2,6-dichloro-4-(trifluoromethyl)phenyl]-4 (trifluoromethylsulfinyl) pyrazole-3-carbonitrile), the neonicotinoids such as imidacloprid (*N*-[1-[(6-Chloro-3-pyridyl)methyl]-4,5-dihydroimidazol-2-yl]nitramide), the anthranilamides, the formononetins such as 7-Hydroxy-3-(4-methoxyphenyl)chromone, the essential oils such as tea tree oil, thyme oil (also known as thymol), citronella oil, and menthol, and the insect growth regulators such as methoxyfenozide (*N*-*tert-*butyl-*N*'-(3-methoxy-*o*-toluoyl)-3,5-xylohydrazide) and the like. Preferred compounds for use in liquid formulations of the invention include thymol, deltamethrin and tau-fluvalinate (Mavrik).

Chemicals of use in the invention must be capable of controlling the population of infesting arthropods, typically by significantly reducing the numbers thereof, such as by killing them. Suitable chemicals that may be admixed with hydrophobic electrets of use in the invention include those chemicals as listed hereinabove.

The man skilled in the art will appreciate that included within the ambit of the term "arthropod" are all the stages of arthropod development that apply to any given arthropod species and may include the egg stage, larval stage, nymph stage, imago stage, and adult stage in an arthropod population, such as those populations that infest plants or animals, such as ectoparasite arthropod populations infesting animals as alluded to herein. The arthropod population to which liquid formulations or compositions of the invention may be applied is any arthropod population that infests plants or animals and/or their environs and/or storage environs therefor. The infesting arthropod species may be any pest species that deleteriously affects plants and/or animals and may be selected from those as listed hereunder. Examples of arthropod pests that infest plants and plant products include stored product moths such as *Plodia interpunctella* (Indian meal moth), *Ephestia kuehniella* (Mediterranean flour moth), *Cadra cautella* (almond moth), grain beetles such as *Oryzaephilus surinamensis* (saw-toothed grain beetle), weevils such as *Cosmopolites sordidus* (banana weevil), and *Sitophilus granarius* (grain weevil), and *Cryptolestes ferrugineus* (rust-red grain beetle), psocids such as the black domestic psocid: *Lepinotus patruelis*(*GB*)*,* mites such as the flour mite, *Acarus siro,* and the red spider mite - *Tetranychus urticae,* moths such as *Cydia pomonella* (Codling moth), and *Helicoverpa armigera,* flies such as *Ceratitis capitata* (Mediterranean fruit fly) and *Bactrocera oleae* (Olive fly), beetles such as *Leptinotarsa decemlineata* (Colorado beetle), ants such as *Solenopsis spp* (fire ants), aphids such as *Aphis gossypii* (cotton aphid), and *Myzus persicae* (green peach aphid), bugs such as *Nezara viridula* (green vegetable bugs), *Bemisia spp.,* (whiteflies) such as *Trialeurodes vaporariorum,* thrips such as *Frankliniella occidentalis* (western flower thrip), mealybugs such as *Phenacoccus aceris* (apple mealybug), scale insects such as *Quadraspidiotus perniciousus* (San Jose Scale), psyllids such as *Psylla pyricola* (Pear pyslla), and the like.

Examples of arthropod pests that infest animals include but are not limited to ectoparasites such as dog fleas (*Ctenocephalides canis*)*,* cat fleas (Ctenocephalides felis), pig (hog) lice, such as *Haematopinus suis,* mange mites, such as *Sarcoptes scabiei var. suis* (causing sarcoptic mange in pigs), follicular mites, such as *Demodex phylloides* (causing demodectic mange in pigs), ticks such as from *Boophilus spp, Amblyomma spp.* and *Ixodes spp.,* such as *Ixodes ricinus* (sheep tick), *Ixodes hexagonus* (hedgehog tick), and *Ixodes canisuga* (British dog ticks), hard ticks e.g dog tick, brown dog tick, Gulf Coast tick, and rocky mountain wood tick, and soft ticks, such as the spinose ear tick *(O*. *turicata),* sticktight flea in pigs and poultry, *Dermanyssus spp* such as poultry red mite (Dermanyssus gallinae) affecting poultry, house flies from the Musca species (affect horses, pigs, humans, and cattle), such as *Musca domestica,* and face flies such as *Musca autumnalis, Drosophila spp., Calliphora spp.,* such as the blue bottle, and *Stomoxys spp.,* such as stable fly (Stomoxys calcitrans) (affects horses, cattle, pigs), mosquitoes such as *Anopheles spp, Culex spp,* and *Aedes spp,* horn flies such as *Haematobia irritans* (affect cattle and horses), horse flies, deer flies, black flies (also known as buffalo gnats), biting midgets (Culicoides spp.) (also known as "punkies" or "no-see-ums"), gnats and eye gnats such as *Hippelates spp.,* common horse bot fly (Gastrophilus intestinalis), throat bot fly (*Gastrophilus nasalis*)*,* nose horse bot fly (*Gastralis haemorrhoidalis*)*,* tracheal mites of bees such as *Acarapis woodi,* varroa mites such as *Varroa destructor* (mites that affect strains of *Apis mellifera*) and the like.

Further arthropod pests that infest humans and their environs include mosquitoes such as Aedes sp (transmit Dengue Fever), *Anopheles sp*.(transmit malaria) and, *Culex sp.* (transmit Japanese encephalitis), tsetse fly (transmits sleeping sickness), Bot-Bot fly, ants, termites, locusts, ticks, cockroaches, lice such as *H Pediculus capitis, Pediculous humanus,* and *Pthirus pubis,* fleas such as *Tunga penetrans, Xenopsylla cheopis* (transmits bubonic plague), and mites such as *Sarcoptes scabiei, Trombicula sp., Demodex folliculorum, Ornithonyssus bacoti,* cattle grub, (*Hypoderma lineatum*)*,* screwworm species such as *Cochliomyia hominivorax,* and human bot (*Dermatobia hominis*), and the like.

The liquid formulations or compositions of the invention may include more than one organic chemical that has the capacity of controlling the population of at least one infesting arthropod species. Thus, compositions of the invention may be used to control 1, 2, 3, or 4 or more populations of arthropods, depending on the degree of infestation on the plant or animal or human and the number of populations of species that are involved in the infestation. Thus, a single liquid composition of the invention may comprise one electret particle "species" loaded with two or more chemical agents of choice depending on end purpose. Or, in the alternative, liquid compositions of the invention may include two or more electret particle species wherein each electret species is loaded with one chemical of choice.

For the purposes of the present invention "controlling populations of animal infesting arthropod species" means that the arthropod population to which compositions of the invention are applied are ones that suffer a decrease in numbers due to death, ill health that may ultimately lead to death, and/or inability to reproduce or reduction in the ability to reproduce. Preferably, the controlling of populations of animal infesting arthropods means that at least 90% of the population of arthropods to which compositions of the invention are applied dies within 28 days of application of liquid compositions of the invention. Preferably, the populations of arthropods that are adversely affected by compositions of the invention die or at best suffer sub-lethal effects which contribute to long-term population reduction as a result of the application of liquid compositions of the invention to the affected area. The person skilled in the art will appreciate that the population of arthropods to which the compositions of the invention are applied may be made up of one or more than one species of arthropod. Examples of species of arthropods that may make up a population of animal-infesting arthropods that may be adversely affected by compositions of the invention include those arthropods as listed hereinbefore.

Further kinds of chemicals that may be added to electret particles of use in the invention include arthropod pheromones such as pheromones that alter arthropod behaviour, such as feeding behaviour or mating behaviour in insects and or arachnids, together with insecticides and arachnicides. Suitable pheromones that can be used in the present invention include sex pheromones such as those emitted by female moths, such as codling moth (*Cydia pomonella*)*,* oriental fruit moth (*Grapholita molesta*)*,* Indian meal moth (*Plodia interpunctella*)*,* Mediterranean flour moth (*Ephestia kuehniella*)*,* almond moth (*Cadra cautella*)*,* European grape vine moth (*Lobesia botrana*)*,* light brown apple moth (*Epiphyas postvittana*)*,* rice stem borer (*Chilo suppressalis*)*,* yellow stem borer (*Scirpophaga incertulas*) and the like; aggregation pheromones such as that emitted by saw-toothed grain beetle (*Oryzaephilus surinamensis*)*,* grain weevil (*Sitophilus granarius*)*,* rust-red grain beetle (*Cryptolestes ferrugineus*) and the like. Pheromones of potential use in the invention are obtainable from Plant Research International, under the *Phero*bank® collection, Wageningen, The Netherlands. Examples of pheromones suitable for use in the invention include E,E-8,10 Dodecadienol, blends of E-8 Dodecen-1-yl acetate, Z-8 Dodecen-1-yl acetate and Z-8 Dodecenol, a blend of E-11 Tetradecenyl acetate, E,E- 9,11 Tetradecadienyl acetate, a blend of Z-11 hexadecenal and Z-9 hexadecenal, the pheromone E,Z-7,9 Dodecadienyl acetate, the pheromone Z,E-9,12 Tetradecadienyl acetate, and a blend of E,Z-2,13 Octadecadienal and E-2 Octadecenal.

Included in liquid formulations of the invention are formulations that contain at least one arthropodicidal chemical effective against infesting arthropods of other arthropods of economic importance to man, such as species of use in the manufacture of honey, such as strains of honey bees (such as *Apis mellifera strains*)*, such* as *varroa mites and tracheal mites,* or on infesting arthropods of species of use in the manufacture of clothing material, such as the silkworm moth (*Bombyx mori*)*,* or arthropods that infest crop and ornamental plants, and arthropods that infest domestic and farm animals.

Liquid formulations according to the invention include electrets that are capable of adhering to eukaryotic tissue such as plant tissue, including leaves, stems, fruiting bodies, and flowers, animal tissue such as skin, hair, fur, horns, feathers, nails, claws and beaks, and arthropod tissue such as the arthropod cuticle including exoskeleton parts such as head, thorax, abdomen, legs, wings, and feet (tarsi).

As a further aspect of the invention, there is provided use of electret particles in the manufacture of an aqueous or oleaginous liquid formulation for controlling arthropod infestation on plants, animals including humans and arthropod species beneficial to man, and animal and human environments. Preferably, the electret particles are selected from carnauba wax, beeswax, Chinese wax, shellac wax, spermaceti wax, candelilla wax, castor wax, ouricury wax, and rice bran wax. Preferably, the electret particles are comprised of carnauba wax. Typically, the electret particles have a mean volume diameter of from 10 to 40µm, preferably from 10 to 30µm or 10 to 15µm.

As a further aspect of the invention, there is provided a process for producing electret particles for use in a liquid formulation according to the invention comprising the steps of:
i) adding a chemical agent selected from at least one arthropodicidal chemical and an arthropod pheromone to particles of an electret;
ii) fusing the chemical agent loaded particles of i) together, forming a solid matrix;
iii) treating the solid matrix of ii) to form millimetre-sized particles suitable for milling; and
iv) milling the particles of iii) to form particles having a volume mean diameter of from 10 to 40 µm, preferably from 10 to 30 µm; and
v) optionally adding a flow agent to the milled particles.

In a further aspect of the invention there is provided a process for producing electret particles of use in a liquid formulation according to the invention comprising the steps of:
i) independently adding liquid electret material and at least one liquid chemical agent into a mixing chamber at a temperature at which the electret is in liquid form;
ii) spraying the mixture of i) into a cooling chamber at a temperature at which the electret material solidifies or begins to solidify forming particles of chemical agent loaded electret material having a volume mean diameter in the range of from 10 to 15 µm. Preferably the volume mean diameter is 10 µm.

In such a process the electret material is selected from carnauba wax, beeswax, Chinese wax, shellac wax, spermaceti wax, candelilla wax, castor wax, ouricury wax, and rice bran wax. Most preferably, the electret material is carnauba wax.

In this aspect of the invention, the at least one chemical agent is selected from pyrethroids, organophosphates, carbamates, spinosans, GABA inhibitors, neonicotinoids, anthranilamides, formonocetins, essential oils and insect growth regulators.

A liquid formulation according to the invention may be used for controlling arthropod infestation on plants, animals, birds and humans. The liquid formulation may also be used for controlling arthropod infestation (e.g. varroa mite infestation; and tracheal mite infestation) on arthropod species beneficial to man, such as honey bees (e.g. on strains of *Apis mellifera*)*.* Moreover, the liquid formulation may be used for controlling arthropod infestation in grain storage areas, in grain transport facilities such as shipping containers, ship holds, trucks and aeroplane bays, and in areas of human habitation.

There now follow examples and figures that illustrate the invention. It is to be understood that the examples and figures are not to be construed as limiting the invention in any way.
**Figure 1****:** The effect of storage for 21 days on carnauba wax particle size in a suspension containing 2, 5 or 10 g wax, 100 ml distilled water and a surfactant: Libsorb or Silwet L77.
**Figure 2****:** Example deposition pattern and % coverage when different formulations were sprayed through a TP11015 nozzle onto water sensitive paper: a) 100 ml water (control), b) 100 ml water, 5.0 g carnauba wax and Silwet L77 (1 %), c) 100 ml water, 5.0 g carnauba wax Libsorb (1 %).
**Figure 3****:** Mavrik residue on leaf discs over time when treated with either Carnauba wax particles (CWP) or standard emulsion spray, and then either kept dry or artificially weathered (Experiment 1).
**Figure 4****:** Mean increase in leaf blade area in control plants experiment 1.
**Figure 5****:** Mean aphid mortality over time when placed on leaf disc samples that were collected one day after spraying with different formulations.
**Figure 6****:** Mean aphid mortality over time when placed on leaf disc samples that were collected eight days after spraying with different formulations.
**Figure 7****:** Mean aphid mortality over time when placed on leaf disc samples that were collected fifteen days after spraying with different formulations.
**Figure 8****:** Graph showing weekly mean temperature data. Experiment 1 from 20/07/2008 to 10/08/2008. Experiment 2 from 10/08/2008 to 31/08/2008.
**Figure 9****:** Graph showing weekly mean humidity data. Experiment 1 from 20/07/2008 to 10/08/2008. Experiment 2 from 10/08/2008 to 31/08/2008.

### Experimental Section

### 1. Development of a sprayable wax carrier of pesticides

### Aim

To investigate the ability of a variety of commercially available surfactants to suspend carnauba wax particles in liquid and the effect of these surfactants on properties of the wax after storage and application.

### Introduction

Carnauba wax particles are hydrophobic and each particle is an electret (holds an internal electrostatic charge after tribocharging). Insects develop an opposite charge to the wax on the cuticle after movement. The wax particles therefore adhere to the insect cuticle via both electrostatic attraction and hydrophobic bonds between the wax and lipid coating on the insect cuticle. The carnauba wax particles can be formulated with active ingredients such as insecticides and then used to deliver the active ingredient to the insect cuticle during attachment.

Wax particles are hydrophobic and they do not wet so in development of a sprayable formulation the hydrophobic character has to be overcome. Liquid mixtures containing a suitable surfactant may overcome this problem.

The purpose of this study was to investigate whether it was possible to suspend the highly hydrophobic carnauba wax powder in water using surfactants so that it might be possible to spray it through conventional insecticide application equipment. A variety of commercially available surfactants were tested and their ability to suspend carnauba wax was evaluated by examining the resulting particle size at different surfactant concentrations. Two commonly used surfactants, Libsorb and Silwet L77 were selected for further testing to a) examine the effect of wax concentration on particle size of the suspension b) examine the effects of storage on the maintenance of the wax suspension and c) examine the ability to spray the suspensions through conventional spray equipment nozzles.

### Methods

### Study 1: Ability of surfactants to suspend carnauba wax particles in water

We tested the ability of ten wetting agents to suspend carnauba wax particles in water. The effect of surfactant concentration was investigated using concentrations of 0.01, 0.1, 1.0, 2.0 and 5.0 % (v:v) and 2.0 g carnauba wax. Two methods of mixing the wax into suspension were investigated:
i) the wax was added to the surfactant first to form a paste and then mixed with 100 ml distilled water; and
ii) Surfactant was added to 100 ml distilled water and mixed before adding the wax.

Once added to the water, the wax was mixed for 5 min before the wax particle size was measured using a Malvern series 2600c droplet and particle sizer with a 63 mm lens. Suspension samples were placed into a specially adapted particle sizing compartment (20 ml capacity). The DV50 (the median particle size based on a volumetric particle size distribution) was calculated as well as the range of particle sizes (considered here as 10-90 %).

### Study 2: The effect of wax concentration on the ability of surfactants to suspend carnauba wax particles

Following the work on the surfactants, two products (Libsorb and Silwet L77) were selected to investigate the effect of wax concentration on the ability of the surfactants to suspend wax. The surfactants were tested at a concentration of 1.0 % in 100 ml distilled water. Carnauba wax was added at concentrations of 2.0, 5.0 and 10.0 g per 100 ml distilled water. Suspensions were mixed for 5 min and then the DV50 was calculated as well as the range of particle sizes (considered here as 10-90 %). A regression analysis was carried out using R version 2.1.1.

### Study 3: Effect of storage time on the suspension of carnauba wax particles

Concentrates of 100 ml distilled water containing 1.0 % of the surfactants Libsorb or Silwet L77 and either 2.0, 5.0 or 10.0 g of wax particles were mixed for 5 min and left to stand for 21 days. To investigate whether the powder had stayed in suspension or separated and/or become clumpy the initial particle size of the wax in suspension was measured on day 1. The samples were then left to stand in a 100 ml measuring cylinder at room temperature (approx. 15 °C). After 21 days the suspensions were mixed for 2 min and then the particle sizes measured.

### Study 4: Assessment of conventional spray equipment to apply a carnauba wax suspension

A concentrate of 5.0 g wax in 100 ml distilled water containing 1.0 % surfactant (either Silwet L77 or Libsorb) was mixed and left to stand for 24 h. These were then diluted to field application rate (200 g wax ha-1, in 100 I water = 2 g I-1). The ability to spray the suspension through different nozzles was analysed by examining the droplet size and the spray deposition coverage.

To investigate the possibility of nozzle blockage, flat fan nozzles with the smallest orifices likely to be used on a tractor mounted sprayer in the field were tested: TP 11001 and TP 11015 with a flow rate of 0.6 l/min. All nozzles were fitted with a 100 mesh (297 µm) filters and were operated at 2.0 bar pressure.

The wax particle sizes in suspensions before and after spraying through the two nozzles were investigated. Spray deposition resulting from the use of each nozzle type was analysed by spraying 5 cm strips of water sensitive paper in a Mardrive unit (1.38 m s-1, 2.0 bar). Deposition coverage was then analysed using the computer image analysis programme ImageJ version 1.36 (Rasband, 2006).

### Results

### Study 1: Ability of surfactants to suspend carnauba wax particles in water

All of the surfactants investigated were able to suspend carnauba wax in water; however, some of the surfactants were able to suspend more of the wax at lower concentrations. Best results (ease of mixing and smaller range of particle size) were obtained by premixing the wetting agent with the wax, and then adding the paste to water. When the wax was added and mixed in the 100 ml solution already containing the surfactant, slightly higher DV50 values resulted with wider particle size ranges.

For most surfactants investigated, as the concentration was increased, less mixing was required to get the wax into suspension. For example, 0.01 % Libsorb required 2 min of stirring, which decreased to 30 s when the surfactant concentration was increased to 5.0%. For all products the higher the concentration of surfactant the easier it was to suspend the wax and the lower the resultant particle size DV50 (Table 1).

### Study 2: The effect of wax concentration on the ability of surfactants to suspend carnauba wax particles

Regression analysis showed the concentration of wax added to the water and surfactant solution to have no significant effect on the DV50 for either Silwet L77 (d.f. = 1, r2 = 0.84, p = 0.26) or Libsorb (d.f. = 1, r2 = 0.17, p = 0.73). With 1% surfactant, there was no difference in the ability to suspend 2 or 10 g of carnauba wax.

### Study 3: Effect of storage time on the suspension of carnauba wax particles

After 21 days storage there were visible differences between the wax suspensions containing either Libsorb or Silwet L77. When Silwet L77 was used, at all three wax concentrations, the storage period resulted in the wax coming out of suspension and forming clumps. Clumping was visible at the top and in particular at the bottom of the measuring cylinder. The samples containing Libsorb showed some settling out of the wax, deposition at the bottom of the cylinders (approx. 5 mm) and a thin crust on top (approx. 3 mm). Generally for all three concentrations of wax, the wax remained in suspension when Libsorb was used, but not when Silwet L77 was used.

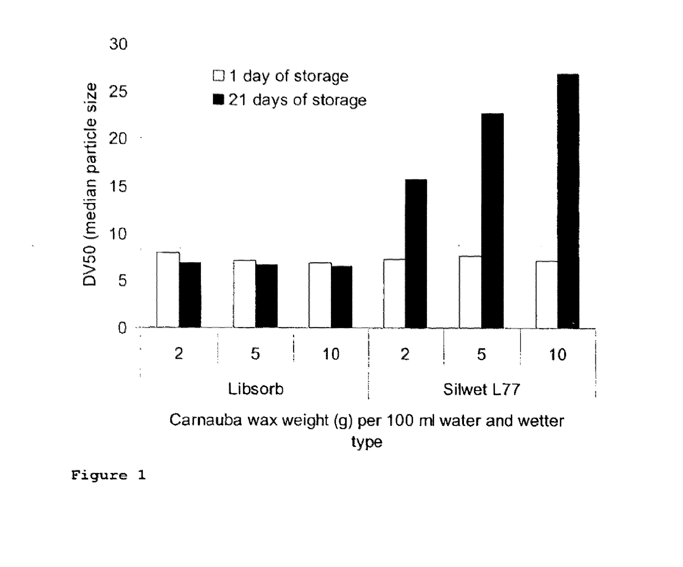

The particle size measurements taken on day 1 showed both suspensions to have similar DV50 values. After 21 days storage there were clear differences in the size of the wax particles within the samples (Figure 1). After re-mixing the Libsorb suspension after 21 days storage, the DV50 values were equivalent to the size they were after 1 days storage. In the suspensions containing Silwet L77, the DV50 values after 21 days storage were at least twice the size of the particles in 1 day samples.

### Study 4: Assessment of conventional spray equipment to apply a carnauba wax suspension

For each surfactant, the size of the wax particles in suspension was measured before and after spray application with each nozzle type (Table 2). No clogging or buildup of wax was seen on the filter after spraying. The wax particle sizes after spraying had similar DV50 values and particle size ranges to the original suspensions.

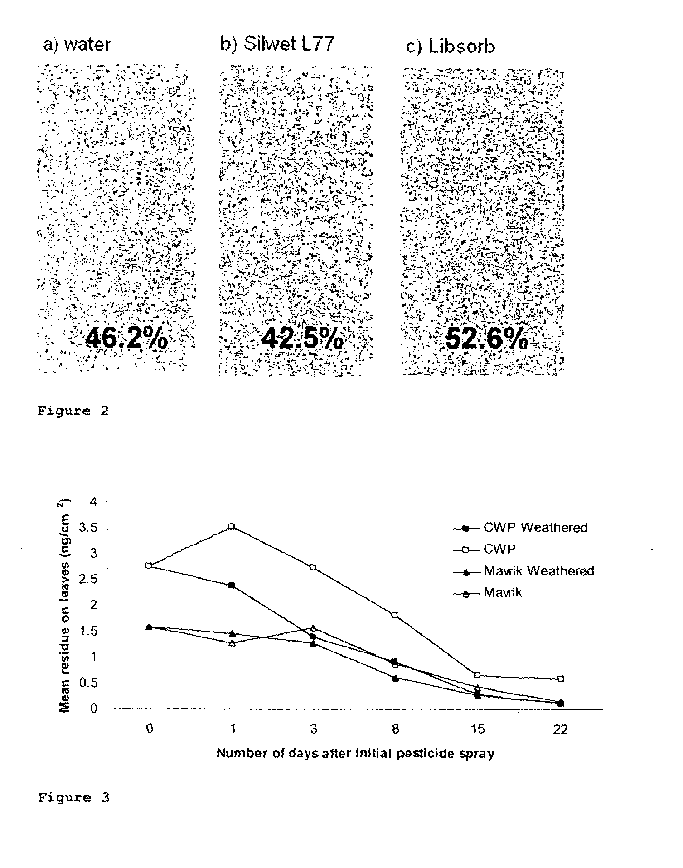

Analysis of the spray deposition from the two nozzles showed that there was not much difference between the deposition patterns of a water control and the two wax suspensions with either Silwet L77 or Libsorb (Figure 2).

Analysis of the spray output from a Micron Ulva plus showed that for the lowest flow restrictor (90 ml min-1) blockages occurred with both formulations resulting in no output being given. With higher flow rate restrictors, blockages did not occur and analysis of spray showed the formulation to have no effect on the droplet spectrum.

### Discussion

The studies show that it is possible to suspend carnauba wax particles in water with a variety of surfactants, surfactant concentrations and wax concentrations and that it is possible to spray such suspensions through narrow conventional spray nozzles.

The concentration of surfactant affected the ability to suspend the wax and the particle size. Some surfactants did not suspend the wax at the lowest concentrations therefore not all surfactants will be suitable for suspending carnauba wax. In terms of the mixing time required to suspend the wax and the final particle size, this study showed that the best surfactants for suspending carnauba wax were Libsorb, Newmans T80 and Rhino.

Pre-mixing the wax with a small volume of surfactant before adding it to the water was easier than adding the wax to a water/surfactant mix, and narrower particle size ranges resulted. However consideration must be given to whether the insecticide in the wax would be damaged by being exposed to a concentrated form of the surfactant. This concentrate can then be further diluted to field rate (as in Study 4) by the insecticide applicator in a tank mix before spraying on the crop.

When the carrying capacity of 100 ml water was investigated, it was shown that while maintaining the surfactant concentration at 1%, increasing the amount of wax in suspension did not affect the DV50 of the particles within the suspension.

Two surfactants were selected to investigate the effect of storing the suspensions: Libsorb and Silwet L77. The Libsorb was shown to maintain the wax particles in suspension for at least 21 days and when mixed after storage the particles returned to the size (both DV50 and size range) they had been prior to storage.

For testing the application of the suspension to surfaces, low flow rate flat fan nozzles were selected because they have the smallest orifices. The particle sizes and the droplet deposition coverage of Libsorb and Silwet L77 suspensions diluted to field rate were measured after being passed through the nozzles. Both of the suspensions were shown to have similar DV50 values and particle ranges and no clogging was experienced when filters were used. The breaking up of the particles by the filter or by the pressure resulted in the suspension flowing through the nozzles whilst not causing any clogging on the filter itself.

Libsorb was highly effective at suspending carnauba wax at a variety of concentrations and with a variety of wax quantities. Libsorb was also was shown to maintain the quality of the concentrate suspension over a storage period of 21 days and the field rate suspension could be sprayed effectively through narrow conventional insecticide spray nozzles. Other surfactants that performed well in Study 1 appear suitable for a sprayable formulation containing carnauba wax.

### Tables

**Table 1: The effect of surfactant concentration on the particle size DV₅₀ and size range of wax in suspension when a paste of the two was added to 100 ml of distilled water and mixed.**

| Surfactant (commercial product name) | Surfactant conc. (%) | DV 50 | DV range (10-90) |
|---|---|---|---|
| Libsorb | 0.01 | 7.28 | 3.57 - 13.25 |
| | 0.1 | 7.55 | 3.83 - 13.78 |
| | 1.0 | 7.54 | 3.85 - 13.05 |
| | 2.0 | 7.53 | 3.90 - 12.88 |
| | 5.0 | 7.39 | 3.59 - 12.47 |
| Silwet L77 | 0.01 | - | - |
| | 0.1 | 7.23 | 3.54 - 12.59 |
| | 1.0 | 7.42 | 3.70 - 12.92 |
| | 2.0 | 7.36 | 3.61 - 12.36 |
| | 5.0 | 7.22 | 3.60 - 11.97 |
| Tween 80 | 0.01 | 7.02 | 3.44 - 10.59 |
| | 0.1 | 6.85 | 3.22 - 10.82 |
| | 1.0 | 6.92 | 3.27 - 10.65 |
| | 2.0 | 6.87 | 3.20 - 11.14 |
| | 5.0 | 6.60 | 2.80 - 10.71 |
| Torpedo II | 0.01 | No full suspension | |
| | 0.1 | No full suspension | |
| | 1.0 | - | - |
| | 2.0 | 5.86 | 2.03 - 18.08 |
| | 5.0 | 6.25 | 2.25 - 10.57 |
| Newmans T80 | 0.01 | 6.58 | 2.91 - 10.81 |
| | 0.1 | 6.81 | 3.21 - 11.55 |
| | 1.0 | 6.57 | 2.82 - 10.36 |
| | 2.0 | 6.68 | 2.98 - 10.52 |
| | 5.0 | 6.76 | 2.99 - 10.83 |
| Fortune | 0.01 | No full suspension | |
| | 0.1 | - | - |
| | 1.0 | 9.83 | 4.32 - 39.80 |
| | 2.0 | 8.99 | 3.76 - 39.66 |
| | 5.0 | 8.05 | 2.89 - 26.41 |
| Guard | 0.01 | No full suspension | |
| | 0.1 | No full suspension | |
| | 1.0 | 6.69 | 2.87 - 11.24 |
| | 2.0 | 6.71 | 2.89 - 11.04 |
| | 5.0 | 6.85 | 3.27 - 11.27 |
| Rhino | 0.01 | 6.70 | 3.05 - 11.27 |
| | 0.1 | 6.92 | 3.29 - 11.67 |
| | 1.0 | 6.84 | 3.16 - 11.71 |
| | 2.0 | 6.94 | 3.23 - 11.68 |
| | 5.0 | 6.88 | 3.07 - 11.56 |
| Biopower | 0.01 | 7.24 | 2.55 - 12.70 |
| | 0.1 | 6.90 | 3.16 - 11.54 |
| | 1.0 | 7.09 | 3.34 - 14.11 |
| | 2.0 | 7.04 | 3.02 - 13.26 |
| | 5.0 | 7.30 | 3.24 - 68.70 |

**Table 2: The effect of spray application on wax particle size in the suspension.**

| | Before application (original suspensions) | | TP 11001 and 2 bar pressure | | TP 11015 and 2 bar pressure | |
|---|---|---|---|---|---|---|
| | DVso | Range | DV₅₀ | Range | DV₅₀ | Ranqe |
| Silwet L77 | 7.09 | 3.26 - 12.84 | 6.74 | 2.75 - 12.10 | 6.73 | 3.01 - 11.64 |
| Libsorb | 6.72 | 2.95 - 11.38 | 7.22 | 2.92 - 38.18 | 6.59 | 2.83 - 11.11 |

### Experimental Section 2

### 1. OBJECTIVES

1. To determine the uptake and longevity on French Bean leaves of a sprayable carnauba wax particle formulation of matrix encapsulated Mavrik under conditions of dry weather and simulated rainfall.
2. To determine the efficacy of a sprayable carnauba wax particle formulation of matrix encapsulated Mavrik sprayed onto French Bean leaves against the aphid *Myzus persicae* after conditions of dry weather and simulated rainfall.

### Introduction

The purpose of the trial was to investigate the feasibility of a new spray technology based on the use of charged carnauba wax particles (CWP) "electrets" inclusions developed by Exosect Ltd. "Electrets" are materials that maintain a permanent dielectric polarisation, or bulk charge, rather than a surface electrostatic charge. The purpose of the charged particle is to enhance adherence to both foliage and the target pest. In this technology the incorporation of active ingredient is within the electret (carnauba wax particles) inclusion bodies, thus largely isolated from carrier oil or water in the formulation.

The trial aimed to evaluate whether or not electrets could be applied directly to foliage by spraying, in either a water or oil-based low volume spray. The ability to adhere to plant surfaces was assessed by analysing the presence of electret residues of the material as applied using water or oil-based formulations located on the plants over time, compared to a conventional spray not containing electret residues or bodies.

This novel technology may improve efficacy whilst at the same time reducing spray drift and pesticide application rates (as a lure and kill spray would be delivered at point sources throughout the crop), lengthen required spray intervals, minimise the pesticide burden to the environment as well as minimise risk to exposure to spray-equipment operators.

In this study, the deposition of electrets, in this case carnauba wax particles, was examined by spraying a water-based spray (containing surfactant to suspend the carnauba wax particles) onto a plant (French Bean). An insecticide supplied by Makhteshim, Mavrik (tau-fluvalinate) was selected for it's efficacy against the target species, *Myzus persicae* (Aphid), and this was formulated into the carnauba wax particles. The retention of Mavrik on French Bean leaves after spraying with the Carnauba wax based formulation and a conventional oil emulsion in water was compared to determine whether carnauba wax particles had increased the levels of deposition and adhesion over time of the insecticide. The effect, of rainfall on adhesion of the sprayed formulations was examined within the same study to determine which formulation was more rain-fast. The effect of leaf residues from both formulations on aphid survival was then examined in a further experiment to determine whether the carnauba wax formulation improved or reduced the efficacy of the insecticide over a conventional water emulsion formulation.

### Experiment 1

Insecticide (Mavrik) matrix encapsulated in the carnauba wax particles was extracted from leaf samples and analysed using GC-ECD. The initial adherence was evaluated as was the longevity of the powder adherence to the plant surface after conditions of 'dry' and 'wet' weather. A conventional water emulsion formulation of the same insecticide was sprayed in another treatment group which was used as a test reference.

### Experiment 2

In a second experiment the efficacy of the sprayed carnauba wax particles formulation versus the test reference formulation against the aphid *Myzus persicae* was compared using leaf disc bioassays at various time points after spraying. Plants were again weathered or not weathered following procedures as outlined in Experiment 1.

### 2. TEST ITEM DETAILS

| | |
|---|---|
| Test item type: | Carnauba wax particles hot-melted with 1 % (w/w) Mavrik concentrate (tau-fluvalinate), suspended in water with 0.1 % Libsorb surfactant. |
| | Mavrik concentrate is 80% pure tau-fluvalinate and 20% Solvesso 100 |
| Test item rate: | Field rate = 200 litres water per ha. One litre of water requires 26.174 g wax (0.209392 g = pure Mavrik) |
| Storage: | Powder was stored in a freezer until required. Required quantity was added to Libsorb and then suspended in water on the morning of spraying. Mavrik was stored in pesticide cabinet until needed. |

### 3. REFERENCE ITEM DETAILS

| | |
|---|---|
| Reference item type: | Mavrik (80% purity) suspended in water. |
| Reference item rate: | Based on the manufacturer's recommendation that at 22% purity, 200 litres water to treat a hectare should contain 0.15 litres 22% Mavrik. We recalculate that the test concentrate and 100 litres should contain 0.02061 litres of 80% purity Mavrik, which is 26.174 g of 80% Mavrik when converted from volume to weight, equal to concentration of test item. Libsorb was again added at 0.1 %. |
| Storage: | Mavrik was stored in a pesticide cabinet until needed. |

### 4. Testing

The majority of the trial was carried out at Mambo-tox, Chilworth Science Park, Southampton. Plants were grown in pots of Levington F2s compost in a glasshouse and sprayed at Mambo-tox and stored in the undercover area, next to the Mambo-tox greenhouse. Samples for residue analysis and for leaf disc bioassays were collected by Exosect staff and analysed at the Exosect facilities.

### 5. EXPERIMENTAL PROCEDURES

### 5.1. Application of treatments

For details of formulations and spray concentrations see 2 and 3 above. Sprays were applied using a Schachtner track sprayer (Chr. Schachtner, Ludwigsburg, Germany) operated according to manufacturer's instructions and Mambo-Tox SOP-42. The spray pressure was set at 3 bar and the spray boom was fitted with a single flat-fan nozzle (Teejet 8003EVS). The sprayer was calibrated in advance of the test applications using purified water, to confirm a deposition rate equivalent to 200 L/ha (i.e. 2 mg deposit/cm² with an actual range of within ± 10% of the target rate and a mean range of within ± 5% of the target rate).

The calibration procedure involved weighing, spraying and re-weighing five square glass plates (each 10 cm x 10 cm), to determine the deposition rate achieved. The plates were placed on supports along the spray track, so that they were nominally at the same height as the leaves of the test plants when they were eventually treated. The calibration plates were sprayed using purified water and this process was performed twice. As long as the deposition rates met the above criteria, the treatments were then applied to the bean plants. If the criteria was not met, then either a different program speed was selected for the sprayer and/or or the height of the nozzle was adjusted and another set of plates was sprayed and weighed, to confirm that the correct delivery rate had been achieved (see appendix 9.1).

Treatments were applied in the order of control (water only), test item and finally the reference item. The track sprayer was thoroughly washed through and wiped down before the reference treatment was applied.

### 5.2 Plants

Treatments were applied to French bean plants *(Phaseolus vulgaris* L. var. The Prince; Moles Seeds). The plants were grown in pots of Levington F2s compost in a glasshouse, under controlled temperature conditions. They were used when approximately 2-3 weeks old and at the 2 true-leaf growth stage. The growing tip of each plant was pinched out to stimulate the growth of the first true leaves and to provide an even spraying surface.

### 5.3. Treatment groups and sampling regime

There were four treatment groups for experiment 1:
- Carnauba wax particles (CWP) test formulation and rainfall weathered.
- Carnauba wax particles (CWP) test formulation and no rainfall.
- Reference formulation and rainfall weathered
- Reference formulation and no rainfall

There were two additional treatment groups for experiment 2:
- Control (no treatment) and rainfall weathered
- Control (no treatment) and no rainfall

Samples for residue analysis (experiment 1) were collected at day 0, 1, 3, 8, 15 and 22. Samples for leaf disc bioassay (experiment 2) were collected at day 1, 3 and 15.

For experiment 1, each group required 30 plants, which allowed five replicate plants per sample time, and 3 extra plants were sprayed for each group in case spares were required. Ten plants were also grown and not sampled throughout the study period, and these plants were regularly measured using digital vernier calipers to quantify the growth of the plants during the study period. Experiment 1 therefore required 165 plants, 13 of which were not sprayed.

For experiment 2, each treated group and control group required 15 plants, which allowed four replicate plants per leaf disc bioassay sampling, plus 3 extra spares per group. Each control treatment group required 12 plants. Experiment 2 therefore required 72 plants, 18 of which were not treated with a pesticide. The two experiments were done one after the other rather than in parallel.

### 5.4. Weathering regime

After spraying, the plants were stored on the ground under a rain cover outdoors. The two groups for each experiment that required weathering with rainfall received 2000 litres per ha volume of water per plant on day 0 (after spraying with formulations), day 2, day 7, day 14 and day 21 (fewer plants at each consecutive time point due to removal of some at each sampling time point). Rainfall was simulated using the boom sprayer. Groups which received artificial rainfall are henceforth referred to as 'weathered'.

### Timetable for studies:

### Experiment 1

| **Date** | **Day** | **Treatment** |
|---|---|---|
| Monday | 0 | Spray 132 plants (66 plants with either test or reference item) |
| | | Sample 5 plants from each group |
| | | Simulate rainfall on 56 plants (28 test & 28 reference) |
| Tuesday | 1 | Sample 5 plants from each group |
| Wednesday | 2 | Simulate rainfall on 46 plants (23 test & 23 reference) |
| Thursday | 3 | Sample 5 plants from each group |
| Monday | 7 | Simulate rainfall on 36 plants (18 test & 18 reference) |
| Tuesday | 8 | Sample 5 plants from each group |
| Monday | 14 | Simulate rainfall on 26 plants (18 test & 18 reference) |
| Tuesday | 15 | Sample 5 plants from each group |
| Monday | 21 | Simulate rainfall on 16 plants (13 test & 13 reference) |
| Tuesday | 22 | Sample 5 plants from each group |

### Timetable for studies:

### Experiment 2

| **Date** | **Day** | **Treatment** |
|---|---|---|
| Monday | 0 | Spray 60 plants with either test or reference item 30 plants with no chemical treatment (control) Simulate rainfall on 45 plants (15 test, 15 reference and 15 control) |
| Tuesday | 1 | Collect leaf discs from 4 plants from each group |
| Monday | 7 | Simulate rainfall on 33 plants (11 test, 11 reference, 11 control) |
| Tuesday | 8 | Collect leaf discs from 4 plants from each group |
| Monday | 14 | Simulate rainfall on 21 plants (7 test, 7 reference and 7 control) |
| Tuesday | 15 | Collect leaf discs from 4 plants from each group |

### 5.5. Internal and external temperature and relative humidity monitoring

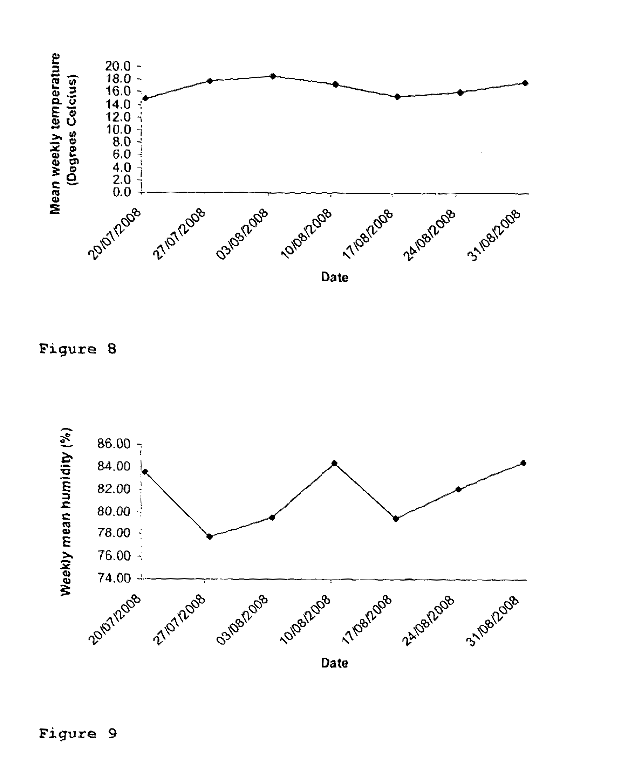

Temperature and relative humidity were measured in the undercover area throughout the trial using a data logger provided by Mambo-tox. For data see Figures 8 and 9.

### 5.6. Accounting for plant growth

Experiment 1: All plant pots were labelled with a number and the treatment group. The label was situated on the pot in such a way that one leaf was to the left of the label (A) and one leaf was to the right (B). The leaf blades of all the plants were measured using callipers at the start of the experiment, before the first spray was applied to the leaves. Two measurements were taken from each blade, the first from where the petiole ended to the tip of the blade, and the second, the width of the widest point of the blade at right angles to the petiole. All measurements were recorded with the plant number, treatment and either leaf A or B. Ten control plants were measured in this way at each sampling point. Each plant that was sampled for residue analysis was measured (length and width only) before spraying and then again before the leaves were excised. As there was no significant change in leaf blade size throughout the experiment, plant growth was not measured in the second experiment.

At the end of the study the area of the ten control plants was measured again. Due to the natural shape of the blade, the total area of the blade was calculated by multiplying the length measured from the end of the petiole to the tip of the blade by the maximum width of the leaf. A relationship between the change in the width and length of the leaves, and the growth (in area) of the leaves was calculated. An adjustment factor for the dilution of active by leaf growth was found not to be necessary.

### 5.7 Analysis of residue sample using ECD

### 5.7.1 Preparation of samples

After leaves had been measured, a 35 mm Petri dish base was used to cut two discs out of each leaf blade (two blades per plant: A and B). The cut discs and Petri dish base were immediately tapped into a glass jar (Fisher UK scientific supplies) and were labelled with plant number, treatment and A or B. The jars were placed into a cool bag during the field stage of the extraction procedure. Once the jars containing the leaf discs were back in the laboratory, 20 ml of n~hexane HPLC grade was added to the jar, leaf discs and Petri dish bases and stored in a fridge until they were ready to be extracted by ultrasonication. Before extraction 100 µl of 0.01 mg/ml internal standard Pentachloronitrobenzene (PCNB) was added to the jar containing the samples and hexane. The samples were placed in an ultra-sonic bath (Ultrawave U1750D) at 40°C for 10 min. Samples of 2 ml were then extracted from the solvent in the jars using a plastic Pasteur pipettes and transferred into standard GC vials ready for analysis; vials were kept in the freezer until required. Calibration solutions were prepared in 20 ml volumetric flasks using PCNB internal standard to cover a range from 5 to 940 ng/ml and the solution run alongside the sample extracts. A calibration graph was constructed.

### 5.7.2 Analysis using ECD

A test solution of Mavrik in hexane was analysed using QCRF017-1 by capillary gas chromatography (GC) fitted with an electron capture detector (ECD). Mavrik contains both fluorine and chlorine groups, which the ECD is more sensitive at detecting than FID. A dimethyl polysiloxane phase (non-polar) column was used to achieve separation from non-actives. Quantitation by internal standard. The GC conditions are described in Appendix number 9.2

### 5.8 Aphid Culture

The aphid culture was created with a *Myzus persicae* starter culture obtained from the Plant and Invertebrate Ecology Group, Rothamsted Research, Harpenden, Herts. The aphids were originally obtained from a UK sourced pesticide susceptible population of *Myzus persicae,* reference no. 4106A. Chinese cabbage seeds were grown in seed trays in a greenhouse located on the external site of Exosect Limited (Boyes Lane, Colden Common, Winchester). Once the seedlings were 3 weeks old, they were transferred to larger pots to grow and watered regularly. Coriander plants were dispersed among the growing cabbages to repel native aphids. A cage (1.5 m x 1 m) was built from 1 x 2 inch wood, and covered with netting. One side had a Velcro seal flap sewn into it to allow plants infested with aphids to be moved in and out. A large tray was placed in the middle of the cage floor and filled with water to drown falling aphids. The cabbage plants were placed on small, slightly elevated dishes, so roots were above the water line. One cabbage plant was initially infested with aphids. Once the aphids had colonised a whole plant, infested leaves were removed and used to inoculate new plants. This procedure was repeated regularly as and when needed.

### 5.9 LEAF DISC BIOASSAY

A 35 mm petri dish was used to cut discs out of leaf blades. The two main leaves from four plants were excised. Each leaf was placed flat on the surface of a plastic tray lined with a sheet of blue absorbent roll, with the treated area facing up. The base of the petri dish was then placed on top of the blade and a disc was cut. The leaf disc was then tapped onto the lid of the petri dish, which contained a piece of cotton wool pad previously cut to fit inside the lid and soaked in distilled water. The base of the petri dish was then placed back over the leaf disc to protect the treated surface. Once all the leaf discs were back at the laboratory, the cover was removed from the leaf disc and 6 medium-sized 3^{rd} instar aphids were placed on each of the discs. The cover was then replaced and the mortality recorded at regular time points for at least 72 h every 24 h the cotton pads were moistened with 3 drops of distilled water using a pasteur pipette.

### 6.0 data analysis

All analyses were carried out using XLStat software by Microsoft, USA.

### 6.1 Analysis of pesticide residue data over time

The amount of Mavrik (tau-fluvalinate) residue on the leaf disc when analysed by GC was expressed as ng Mavrik per cm² of leaf disc.

ANOVA tests were done to compare all four treatment groups at each sampling day (Day 0, 1, 3, 8, 15 and 22). All residuals were tested for normality and only Day 8 residue data required a square root transformation to normalise the data.

### 6.2 Analysis of plant growth over time in experiment 1

The areas of the control plant leaves were calculated by multiplying the length of the leaf (the measurement from the end of the petiole to the tip of the leaf blade), and the maximum width of the leaf. Comparisons were made between leaf area on day 0 with each sampling date thereafter. Paired t-tests were used to test whether there were significant differences between area measurements taken on day 0 compared to the same plants on days 1, 3, 8, 15 and 22. Control plant growth variation was analysed using a non-parametric Kruskal-Wallace test with Bonferroni adjustment.

### 6.3 Analysis of aphid mortality in experiment 2

An Abbott's adjustment for control mortality was made to all the data. Qualitative probit models were applied to the data at 24, 48 and 72 h after leaves were inoculated with aphids. Non-overlapping 95% confidence limits were used to determine the significance of any differences in the predicted number dead between groups at each sampling time.

### 7.0 RESULTS AND DISCUSSION

### 7.1 Residue analysis experiment 1

There was a significant effect of treatment and weathering method on residue retention on each day of sampling: (Day 0: F_{1,39} = 12.46, P = 0.001; Day 1: F_{3,39} = 27.039, P < 0.0001; Day 3: F_{3,39} = 16.578, P < 0.0001; Day 8: F_{3,39} = 20.811, P < 0.001; Day 15: F_{3,39} = 6.159, P = 0.002 and Day 22: F_{3,39} = 48.456, P < 0.0001).

On day 0, after the initial spray of all the bean plants, before they were weathered, the amount of residue on the leaves was significantly different between the plants sprayed with the conventional emulsion formulation and those sprayed with the Carnauba wax particles formulation: those sprayed with the Carnauba wax particles had significantly more Mavrik residue on them. This was surprising because the formulations were created with the same concentration of Mavrik.

On day 1, after half the treated plants had been weathered, samples taken from the plants sprayed with Carnauba wax particles had significantly more residue on them than those sprayed with the conventional emulsion solution.

On day 3 and 8, the un-weathered Carnauba wax particle treated plants had significantly more Mavrik residue on them than the other treatment groups (P < 0.0001). There was no significant difference between other treatment groups.

On day 15, the un-weathered Carnauba wax particle plants had significantly more residue on them than weathered Carnauba wax particle plants (P < 0.005) and un-weathered conventional emulsion plants (P < 0.003); there was no significant difference between any of the other treatment groups.

On day 22, un-weathered Carnauba wax particle treated plants had significantly more residue on them than the weathered Carnauba wax particle treated plants (P < 0.0001), weathered emulsion (P < 0.0001) and un-weathered emulsion (P < 0.0001). There was no significant difference between any of the other groups.

The residue analysis (Figure 3) showed that the Carnauba wax particles treated plants had more residue on them at the start of the trial than those treated with the Mavrik emulsion.

The un-weathered Carnauba wax particles treated plants had more residues on them than any of the other treated groups (Figure 3).

### 7.2.1 Control plant leaf area in experiment 1

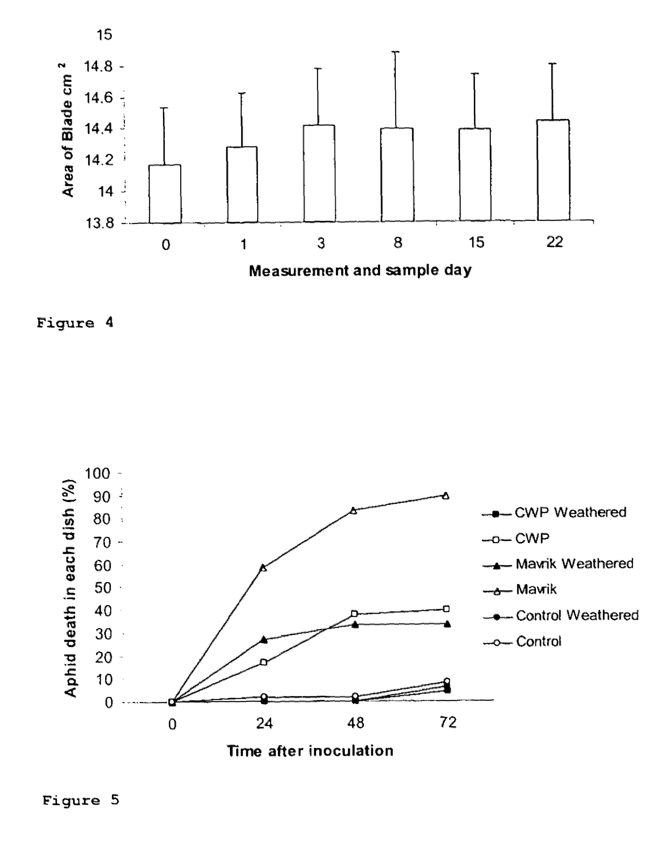

There was no significant increase in leaf area in the control plants after 22 days of the trial, P=0.970, with a Bonferroni adjustment of 0.0033. (See Figure 4, and Appendix 9.4)

### 7.2.2 Sampled plant leaf area in experiment 1

There was no significant change in leaf area from the first day of measurement on day 0 compared to day 1 (P = 0.071), day 8 (P = 0.201) and day 15 (P = 0.328).

There was a significant increase in leaf area between day 0 and 3 (P < 0.0001), and day 0 and 22 (P = 0.326). The mean difference between the measurements on day 0 and the rest of the measurements taken on the other sampling days did not exceed 0.6 cm² (see appendix 9.5). When taking into account the overall size of the leaves sprayed a maximum area increase of 0.6 cm² would not have had much of a diluting effect on the concentration of the residues on the plant leaves, and the reduction in residues observed was due to other factors, most likely weathering actions and Mavrik degradation. All plants in all groups had grown by such a slight amount that an adjustment in the calculation of residue retention per cm² due to plant growth was deemed unnecessary.

### 7.3 Aphid bio-assays in experiment 2.

### 7.3.1 Samples collected one day after spraying:

When aphids were placed onto leaf discs collected one day after spraying, there was a significant effect of treatment on the number of aphids dead after 24, 48 and 72 h of exposure to the treatments. Un-weathered Mavrik in the conventional emulsion was more efficacious than all other treatments on each day. Weathered emulsion and un-weathered Carnauba wax particles treated plants were both significantly more efficacious than weathered Carnauba wax particles treated plants on each day (see Appendix 9.7).

When the aphids were placed on the discs sampled one day after spraying, conventional emulsion treated discs caused the highest and quickest mortality (see Figure 5).

### 7.3.2 Samples collected eight days after spraying:

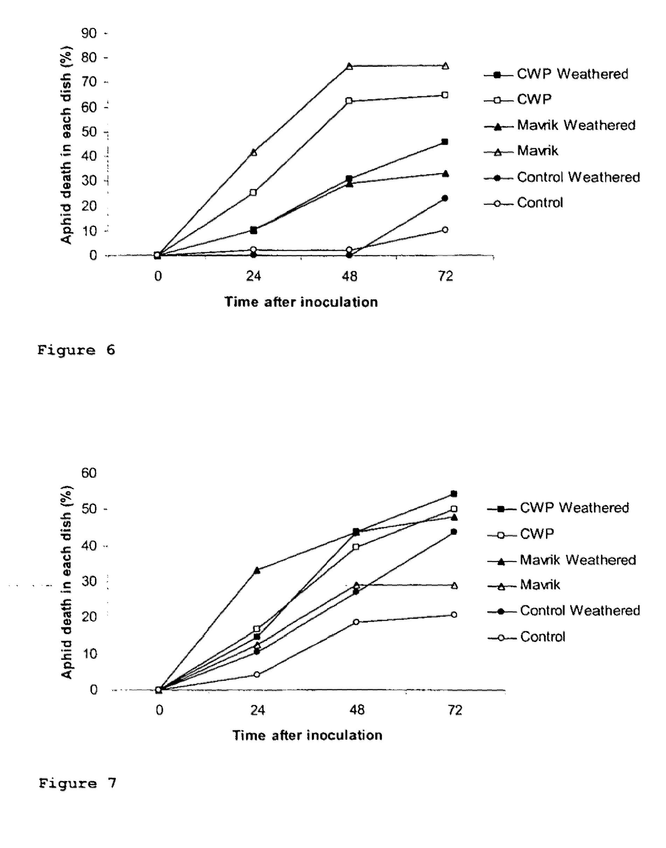

When aphids were placed onto leaf discs collected eight days after spraying, there was a significant effect of treatment on aphid death after 24, 48 and 72 h of exposure to the treatments. There was no significant difference in Aphid death between the un-weathered conventional emulsion and the un-weathered Carnauba wax particles up to 72 h following exposure to leaf discs. Both un-weathered groups were significantly more efficacious than the weathered groups. There was no difference between the weathered groups (See Figure 6).

### 7.3.3 Samples collected fifteen days after spraying:

When aphids were placed onto leaf discs collected 15 days after spraying, there was a significant effect of treatment on aphid death after 24 and 72 h of exposure to the treatments. At 24 h un-weathered Carnauba wax particles caused significantly more mortality than both weathered groups; no other treatment groups were significantly different. At 72 h, Carnauba wax particles caused significantly more aphid mortality than both emulsion treated groups, and weathered Carnauba wax particles were significantly more efficacious than weathered emulsion. When the aphids were placed onto the discs fifteen days after spraying, those treated with un-weathered Carnauba wax particles therefore had the highest mortality, followed by weathered Carnauba wax particles and then emulsion (See Figure 7).

After 15 days the efficacy of the emulsion had significantly reduced and the plants sprayed with the Carnauba wax particles killed significantly more aphids than those treated with a normal emulsion.

### 8.0. DISCUSSION SUMMARY

We successfully suspended a formulation of Carnauba wax particles with matrix encapsulated insecticide in water using a minimal amount of the surfactant Libsorb (0.1 %) and found this easier to mix with water than the conventional oil based Mavrik emulsion. Immediately after spraying the plants had a greater quantity of Mavrik residue on them when sprayed with Carnauba wax particles compared to the oil emulsion. The un-weathered Carnauba wax treated plants had the greatest residue remaining at the end of the trial.

Aphid mortality rates were higher in the Carnauba wax treated plants compared to the emulsion treated plants only after 15 days following treatment.

The aphid bioassays showed that 15 days after spraying, the Carnauba wax treatment, both weathered and un-weathered, resulted in a higher mortality rate than the emulsion treatment. This was surprising as the emulsion treatments resulted in greater mortality at the beginning of the trial than the Carnauba wax treatment; despite the fact that the Carnauba wax treated plants had more of the Mavrik residue on them throughout the trial. At the start of the trial the plants sprayed with Carnauba wax particles had double the amount of the Mavrik active available to act on the Aphids, compared to the emulsion treated plants, but the emulsion treated plants caused greater Aphid mortality. After 15 days, there was still approximately double the amount of Mavrik on the un-weathered Carnauba wax treated plants, but the Aphid mortality rate was significantly higher than on those treated with the emulsion.

It is possible that the aphids took up more of the Mavrik via the Carnauba wax formulation but because the Mavrik was matrix encapsulated inside the wax, it took longer for the Mavrik to transfer across to the cuticle of the insects. The Carnauba wax particles seemed to extend the amount of time the Mavrik remained active against the aphids by over a week.

In the treatments with no simulated rainfall, the study showed that the emulsion treatment resulted in higher levels of aphid mortality (~90%), which subsided to 30% over two weeks, whereas the Carnauba wax treatment resulted in a low level of mortality initially (30%) increasing to 65% by day 15. A combination spray treatment with Mavrik emulsion and Mavrik matrix encapsulated in Carnauba wax particles may provide efficient and long lasting Aphid control.

The Carnauba wax formulation shows promise, particularly since it was easier to mix with water than the oil-based emulsion. If growers receive a concentrated mix of insecticide matrix encapsulated in Carnauba wax particles and surfactant, this paste would mix with water very quickly and stay suspended in the tank, resulting in a very homogenous mix. We found it difficult to mix the oil formulation with the water, even with vigorous stirring, and think it possible that growers would also have more difficulty creating a homogenous, fully suspended mixture with the conventional formulation.

### 9.0 APPENDIX

### 9.1 Calibration of track sprayer

Nozzle: Teejet 8003 EVS (blue); Height 36.5 cm. Pressure: 3 bar. Aperture rate: 200 L/ha. Prog: 14 (3.75 km/h). Target: 10x10 cm glass plate (x5). Target Deposit: 0.200 g per plate.
Solution: Purified water.

| | Dry weight (g) | Wet weight (g) | Deposit (g) |
|---|---|---|---|
| A | 73.544 | 73.76 | 0.216 |
| B | 72.489 | 72.702 | 0.213 |
| C | 72.866 | 73.085 | 0.219 |
| D | 71.727 | 71.937 | 0.21 |
| E | 71.391 | 71.587 | 0.1960 |
| | | | 0.2108 X |
| | | | |

| Dry weight (g) | | Wet weight (g) | Deposit (g) |
|---|---|---|---|
| A | 73.544 | 73.759 | 0.215 |
| B | 72.489 | 72.696 | 0.207 |
| C | 72.866 | 73.076 | 0.21 |
| D | 71.727 | 71.932 | 0.205 |
| E | 71.391 | 71.588 | 0.1970 |
| | | | 0.2068 |
| | | | |

| Dry weight (g) | | Wet weight (g) | Deposit (g) |
|---|---|---|---|
| A | 73.544 | 73.76 | 0.216 |
| B | 72.489 | 72.682 | 0.193 |
| C | 72.866 | 73.065 | 0.199 |
| D | 71.727 | 71.924 | 0.197 |
| E | 71.391 | 71.598 | 0.2070 |
| | | | 0.2024 |

### 9.2 GC Conditions

| | | | |
|---|---|---|---|
| OVEN | | | |
| Initial temp: 60°C (on) | | | Maximum temp: 350°C |
| Initial time: 2.00 min | | | Equilibration time : 3.00 min |
| Ramps: | | | |

| # | Rate | Final temp | Final time |
|---|---|---|---|
| 1 | 12.00 | 250 | 0.00 |
| 2 | 15.00 | 350 | 3.00 |
| 3 | 0.00(off) | | |

Post temp: 60°C, Post time; 0.00 min, Run time: 27.50 min
FRONT INLET (SPLIT/SPLITLESS)
Mode: Split; Initial temp: 220°C (on); Pressure: 20.00psi (on); Split ratio: 20:1; Split flow: 101.1 mL/min; Total flow: 108.8 mL/min; Gas saver: on; Saver flow: 20.0 mL/min; Saver time: 2.00 min; Carrier gas: Helium

### COLUMN 1

Capillary column; Model number: SGE 054798 Solgel-1; Maximum temperature: 350°C; Nominal length: 30.0 m; Nominal diameter: 320.00 µm; Nominal film thickness: 0.25 µm; Mode: constant pressure; Pressure: 20.00 psi; Nominal initial flow: 5.1 mL/min; Average velocity: 66 cm/sec; Inlet: front inlet; Outlet: back detector; Outlet pressure: ambient.

### BACK DETECTOR (µECD)

Temperature: 350°C (on); Mode: constant makeup flow; Makeup flow: 15.0 mL/min (on); Makeup gas type: Nitrogen; Electrometer: on.

### FRONT INJECTOR

Sample washes: 3; Sample pumps: 3; Injection volume: 2.0 microliters; Syringe size: 10.0 microliters; Post Inj Solvent A washes: 3; Post Inj Solvent B washes: 3; Viscosity delay: 0s

### 9.3 Residue data analysis statistical results

### 9.3.1 Day 0

| **T = Day 0** | | | | | |
|---|---|---|---|---|---|
| Treatment / Tukey (HSD) / Analysis of the differences between the categories with a confidence interval of 95%: | | | | | |
| Contrast | Difference | Standardized difference | Critical value | Pr > Diff | Signific ant |
| CWP vs Mavrik | 1.165 | 3.570 | 2.024 | 0.001 | Yes |
| Tukey's d critical value: | | | 2.863 | | |

### 9.3.2 Day 1

| **T = Day 1** | | | | | |
|---|---|---|---|---|---|
| Analysis of variance: | | | | | |
| Source | DF | Sum of squares | Mean squares | F | Pr > F |
| Model | 3 | 31.950 | 10.650 | 27.039 | < 0.0001 |
| Error | 36 | 14.180 | 0.394 | | |
| Corrected Total | 39 | 46.129 | | | |
| *Computed against model Y=Mean(Y)* | | | | | |

| **T=1** | | | | | |
|---|---|---|---|---|---|
| Treatment / Tukey (HSD) / Analysis of the differences between the categories with a confidence interval of 95%: | | | | | |
| Contrast | Difference | Standardi zed difference | Critical value | Pr > Diff | Significa nt |
| CWP vs Mav | 2.252 | 8.024 | 2.693 | <0.0001 | Yes |
| CWP vs Mav Rain | 2.070 | 7.375 | 2.693 | <0.0001 | Yes |
| CWP vs CWP Rain | 1.146 | 4.083 | 2.693 | 0.001 | Yes |
| CWP Rain vs Mav | 1.106 | 3.941 | 2.693 | 0.002 | Yes |
| CWP Rain vs Mav Rain | 0.924 | 3.292 | 2.693 | 0.011 | Yes |
| Mav Rain vs Mav | 0.182 | 0.648 | 2.693 | 0.915 | No |
| Tukey's d critical value: | | | 3.809 | | |

### 9.3.3 Day 3

| **T = Day 3** | | | | | |
|---|---|---|---|---|---|
| Analysis of variance: | | | | | |
| Source | DF | Sum of squares | Mean squares | F | Pr > F |
| Model | 3 | 13.481 | 4.494 | 16.578 | < 0.0001 |
| Error | 36 | 9.758 | 0.271 | | |
| Corrected Total | 39 | 23.239 | | | |
| *Computed against model Y=Mean(Y)* | | | | | |

| **T=3** | | | | | |
|---|---|---|---|---|---|
| Treatment / Tukey (HSD) / Analysis of the differences between the categories with a confidence interval of 95%: | | | | | |
| Contrast | Difference | Standardized difference | Critical value | Pr > Diff | Significant |
| CWP vs Mav Rain | 1.462 | 6.279 | 2.693 | < 0.0001 | Yes |
| CWP vs CWP Rain | 1.329 | 5.708 | 2.693 | < 0.0001 | Yes |
| CWP vs Mav | 1.164 | 4.999 | 2.693 | < 0.0001 | Yes |
| Mav vs Mav Rain | 0.298 | 1.280 | 2.693 | 0.581 | No |
| Mav vs CWP Rain | 0.165 | 0.709 | 2.693 | 0.893 | No |
| CWP Rain vs Mav Rain | 0.133 | 0.571 | 2.693 | 0.940 | No |
| Tukey's d critical value: | | | 3.809 | | |

### 9.3.4 Day 8

| **T = Day 8** | | | | | |
|---|---|---|---|---|---|
| Analysis of variance: | | | | | |
| Source | DF | Sum of squares | Mean squares | F | Pr > F |
| Model | 3 | 1.847 | 0.616 | 20.811 | < 0.0001 |
| Error | 36 | 1.065 | 0.030 | | |
| Corrected Total | 39 | 2.912 | | | |
| *Computed against model Y=Mean(Y)* | | | | | |

| **T=8** | | | | | |
|---|---|---|---|---|---|
| Treatment / Tukey (HSD) / Analysis of the differences between the categories with a confidence interval of 95%: | | | | | |
| Contrast | Difference | Standardized difference | Critical value | Pr > Diff | Significant |
| CWP vs Mav Rain | 0.586 | 7.619 | 2.693 | < 0.0001 | Yes |
| CWP vs Mav | 0.417 | 5.428 | 2.693 | < 0.0001 | Yes |
| CWP vs CWP Rain | 0.394 | 5.118 | 2.693 | < 0.0001 | Yes |
| CWP Rain vs Mav Rain | 0.192 | 2.502 | 2.693 | 0.077 | No |
| CWP Rain vs Mav | 0.024 | 0.310 | 2.693 | 0.990 | No |
| Mav vs Mav Rain | 0.169 | 2.192 | 2.693 | 0.145 | No |
| Tukey's d critical value: | | | 3.809 | | |

### 9.3.5 Day 15

| **T = Day 15** | | | | | |
|---|---|---|---|---|---|
| Analysis of variance: | | | | | |
| Source | DF | Sum of squares | Mean squares | F | Pr > F |
| Model | 3 | 0.883 | 0.294 | 6.159 | 0.002 |
| Error | 36 | 1.720 | 0.048 | | |
| Corrected Total | 39 | 2.603 | | | |
| *Computed against model Y=Mean(Y)* | | | | | |

| **T=15** | | | | | |
|---|---|---|---|---|---|
| Treatment / Tukey (HSD) / Analysis of the differences between the categories with a confidence interval of 95%: | | | | | |
| Contrast | Difference | Standardized difference | Critical value | Pr > Diff | Signific ant |
| CWP vs Mav Rain | 0.369 | 3.779 | 2.693 | 0.003 | Yes |
| CWP vs CWP Rain | 0.355 | 3.631 | 2.693 | 0.005 | Yes |
| CWP vs Mav | 0.211 | 2.153 | 2.693 | 0.156 | No |
| Mav vs Mav Rain | 0.159 | 1.625 | 2.693 | 0.378 | No |
| Mav vs CWP Rain | 0.144 | 1.478 | 2.693 | 0.461 | No |
| CWP Rain vs Mav Rain | 0.014 | 0.147 | 2.693 | 0.999 | No |
| Tukey's d critical value: | | | 3.809 | | |

### 9.3.6 Day 22

| T = Day 22 | | | | | |
|---|---|---|---|---|---|
| Analysis of variance: | | | | | |
| Source | DF | Sum of squares | Mean squares | F | Pr > F |
| Model | 3 | 1.622 | 0.541 | 48.456 | < 0.0001 |
| Error | 36 | 0.402 | 0.011 | | |
| Corrected Total | 39 | 2.024 | | | |
| *Computed against model Y=Mean(Y)* | | | | | |

| **T=22** | | | | | |
|---|---|---|---|---|---|
| Treatment / Tukey (HSD) / Analysis of the differences between the categories with a confidence interval of 95%: | | | | | |
| Contrast | Difference | Standardized difference | Critical value | Pr > Diff | Significant |
| CWP vs CWP Rain | 0.486 | 10.288 | 2.693 | < 0.0001 | Yes |
| CWP vs Mav Rain | 0.455 | 9.632 | 2.693 | < 0.0001 | Yes |
| CWP vs Mav | 0.451 | 9.547 | 2.693 | < 0.0001 | Yes |
| Mav vs CWP Rain | 0.035 | 0.741 | 2.693 | 0.880 | No |
| Mav vs Mav Rain | 0.004 | 0.085 | 2.693 | 1.000 | No |
| Mav Rain vs Ent Rain | 0.031 | 0.656 | 2.693 | 0.913 | No |
| Tukey's d critical value: | | | 3.809 | | |

### 9.4 Control plant leaf area analysis

| Kruskal-Wallis test: | |
|---|---|
| K (Observed value) | 0.899 |
| K (Critical value) | 11.070 |
| DF | 5 |
| p-value (Two-tailed) | 0.970 |
| alpha | 0.05 |

### 9.5. Sampled plant leaf area analysis

### 9.5.1 Mean difference in area

| | **Mean sample plant Area cm²** | **Day 0 mean area cm²** | **Difference in area cm²** |
|---|---|---|---|
| **Day 1** | 14.57718161 | 14.4462625 | 0.130919108 |
| **Day 3** | 14.05116936 | 13.453545 | 0.59762436 |
| **Day 8** | 15.68704125 | 15.48519152 | 0.201849735 |
| **Day 15** | 13.25228781 | 12.9246675 | 0.327620308 |
| **Day 22** | 13.10252875 | 12.77612 | 0.32640875 |

### 9.5.2 Day 1

| | |
|---|---|
| Difference | 0.131 |
| t (Observed value) | 1.859 |
| t (Critical value) | 2.023 |
| DF | 39 |
| p-value (Two-tailed) | 0.071 |
| alpha | 0.05 |

### Test interpretation:

H0: The difference between the means is not significantly different from 0.
Ha: The difference between the means is significantly different from 0.

The risk to reject the null hypothesis HO while it is true is 7.06%

### 9.5.3 Day 3

| | |
|---|---|
| Difference | 0.598 |
| t (Observed value) | 4.920 |
| t (Critical value) | 2.023 |
| DF | 39 |
| p-value (Two-tailed) | < 0.0001 |
| alpha | 0.05 |

### Test interpretation:

H0: The difference between the means is not significantly different from 0.
Ha: The difference between the means is significantly different from 0.

As computed p-value is greater than the significance level alpha=0.05, one should reject the null hypothesis H0, and accept the alternative hypothesis Ha.

The risk to reject the null hypothesis H0 while it is true is lower than 0.01 %

### 9.5.4 Day 8

| | |
|---|---|
| Difference | 0.202 |
| t (Observed value) | 0.596 |
| t (Critical value) | 2.023 |
| DF | 39 |
| p-value (Two-tailed) | 0.554 |
| alpha | 0.05 |

### Test interpretation:

H0: The difference between the means is not significantly different from 0.
Ha: The difference between the means is significantly different from 0.

As computed p-value is greater than the significance level alpha=0.05, one should accept the null hypothesis H0.

The risk to reject the null hypothesis H0 while it is true is 55.45%

### 9.5.5 Day 15

| | |
|---|---|
| Difference | 0.328 |
| t (Observed value) | 1.629 |
| t (Critical value) | 2.023 |
| DF | 39 |
| p-value (Two-tailed) | 0.111 |
| alpha | 0.05 |

### Test interpretation:

H0: The difference between the means is not significantly different from 0.
Ha: The difference between the means is significantly different from 0.

As computed p-value is greater than the significance level alpha=0.05, one should accept the null hypothesis H0,

The risk to reject the null hypothesis H0 while it is true is 11.14%.

### 9.5.6 Day 22

| | |
|---|---|
| Difference | 0.326 |
| t (Observed value) | 2.122 |
| t (Critical value) | 2.023 |
| DF | 39 |
| p-value (Two-tailed) | 0.040 |
| alpha | 0.05 |

### Test interpretation:

H0: The difference between the means is not significantly different from 0.
Ha: The difference between the means is significantly different from 0.

As computed p-value is greater than the significance level alpha=0.05, one should reject the null hypothesis H0, and accept the alternative hypothesis Ha.

The risk to reject the null hypothesis H0 while it is true is lower than 4.03%

### 9.6 Aphid bio-assays in experiment 2

### 9.6.1 Aphid leaf disc samples, 1 day after spraying

| 24 hours after leaf inoculation | | |
|---|---|---|
| | Lower Bound 95% | Upper bound 95% |
| Mavrik | 2.600 | 4.245 |
| Mavrik Rain | 0.967 | 2.453 |
| CWP | 0.408 | 1.610 |
| CWP Rain | 0.000 | 0.000 |

| 48 hours after leaf inoculation | | |
|---|---|---|
| | Lower Bound 95% | Upper bound 95% |
| Mavrik | 4.244 | 5.506 |
| Mavrik Rain | 1.275 | 2.847 |
| CWP | 1.425 | 3.026 |
| CWP Rain | 0.000 | 0.000 |

| 72 hours after leaf inoculation | | |
|---|---|---|
| | Lower Bound 95% | Upper bound 95% |
| Mavrik | 4.601 | 5.706 |
| Mavrik Rain | 1.068 | 2.586 |
| CWP | 1.318 | 2.898 |
| CWP Rain | 0.000 | 0.000 |

### 9.6.2 Aphid leaf disc samples, 8 days after spraying

| 24 hours after inoculation | | |
|---|---|---|
| | Lower Bound 95% | Upper bound 95% |
| Mavrik | 1.644 | 3.277 |
| Mavrik Rain | 0.248 | 1.306 |
| CWP | 0.809 | 2.236 |
| CWP Rain | 0.248 | 1.306 |

| 48 hours after inoculation | | |
|---|---|---|
| | Lower Bound 95% | Upper bound 95% |
| Mavrik | 3.819 | 5.230 |
| Mavrik Rain | 1.068 | 2.586 |
| CWP | 2.848 | 4.467 |
| CWP Rain | 1.171 | 2.717 |

| 72 hours after inoculation | | |
|---|---|---|
| | Lower Bound 95% | Upper bound 95% |
| Mavrik | 3.819 | 5.230 |
| Mavrik Rain | 1.068 | 2.586 |
| CWP | 2.848 | 4.467 |
| CWP Rain | 1.171 | 2.717 |

### 9.6.3 Aphid leaf disc samples, 15 days after spraying

| 4 hours after inoculation | | |
|---|---|---|
| | Lower Bound 95% | Upper bound 95% |
| Mavrik | 0.161 | 1.116 |
| Mavrik Rain | 0.110 | 0.985 |
| CWP | 1.109 | 2.639 |
| CWP Rain | 0.044 | 0.784 |

| 48 hours after inoculation | | |
|---|---|---|
| | Lower Bound 95% | Upper bound 95% |
| Mavrik | 0.197 | 1.227 |
| Mavrik Rain | 0.418 | 1.640 |
| CWP | 1.025 | 2.527 |
| CWP Rain | 0.558 | 1.866 |

| 72 hours after inoculation | | |
|---|---|---|
| | Lower Bound 95% | Upper bound 95% |
| Mavrik | 0.115 | 1.045 |
| Mavrik Rain | 0.000 | 0.000 |
| CWP | 1.178 | 2.721 |
| CWP Rain | 0.272 | 1.377 |

### Experimental Section: ADHERENCE AND RESIDUAL ACTIVITY

### SUMMARY

The aim of this study was to determine effects of adherence and residual activity of an insecticide (Deltamethrin) in a sprayable carnauba wax formulation; observing affects on the survival of the predatory bug, *Orius laevigatus.* The end points of the study were mortality of *Orius* in four bioassays setup at 0, 3, 7 and 14 days after treatment (DAT) after exposure to residues of the test item.

A limit test was carried out using the rate of 0.76 g/ha carnauba wax formulation (equivalent to 0.0038 g/L). For comparative purposes, an untreated deionised water (0.1% Tween 20) control group was included.

All treatments were applied to cotton plants using a Track Sprayer at an application rate of 200 Uha. Once the spray deposit had dried, leaf discs were taken for the *Orius* bioassay and for residue analysis. Five nymphs of *O.laevigatus* were confined to the treated surface of the leaf discs and fed with Ephestia eggs on bioassay start and following the 48 hr assessment. In the bioassay, the control treatment, and the test item were replicated eight times. The mortality of the *Orius* was assessed for each bioassay at 2, 24, 48 and 72 hours after insect addition.

Carnauba wax, at the rate of 0.76 g/ha had a statistically significant effect (P>0.01) on the mortality of the *Orius* compared to the control (Homoscedastic two-tailed t test, ToxCalc version 5.0.23, 1999).

The observed test criteria was that control mortality during 72 hours for the 0, 3 and 14 DAT bioassays did not exceed 20% (actual mortality of 20, 10 and 10% respectively) and control mortality during 72 hours for the 7 DAT bioassays was 32.5%

### MATERIALS

### 1.1 Test Item and dilution rate

The test item, carnauba wax, was diluted in deionised water shortly prior to application and the spray solution was thoroughly agitated to ensure its homogeneity. The application volume for all treatments was equivalent to 200 L/ha.

| | |
|---|---|
| Identity: | Carnauba Wax |
| | (hot-melt formulated with 1 % w/w Deltamethrin concentrate) |
| Supplier: | Exosect Ltd |
| Storage policy: | Test items will be retained under ambient conditions at least until the expiry date of the batch. |
| Application rate: | 0.76 g/ha (equivalent to 0.0038 g a.i./L) |
| Negative control: | Deionised water with 0.1 % Tween 20 |

### TEST SYSTEM

Specimens of *O.laevigatus* were obtained as eggs from a commercial supplier. Ephestia (moth) eggs were provided as food for these predatory bugs. *Orius* had been kept in similar environmental conditions to the Study and were used when they were no older than 72 hours after hatching.

### METHODS

### 3.1 Preparation of the Test Concentrations

Treatment solutions were prepared just prior to use by weighing the test and reference items and diluting to volume in 0.1% Tween 20. Treatments were applied to the cotton plants using a Track Sprayer at a spray pressure of 2 bar. The sprayer was calibrated prior to the application of the treatments. An application volume equivalent to 194 and 204 Uha (range of 182 - 214 L/ha) was achieved for the bioassay.

Treatments were applied in the order of control (0.1 % Tween 20 in deionised water), and then the treatment rate of carnauba wax. The sprayer was cleaned with acetone and water between the applications.

### 3.2 Test Arenas

The *Orius* were exposed to fresh product residues in test arenas at time points post spray application. Each test unit consisted of an excised cotton leaf disc within a 9 cm Petri dish. These leaves were placed on top of a thin layer of agar. Each Petri dish had the inner walls treated with fluon to prevent the *Orius* from escaping, and each leaf disc had Ephestia eggs available as a food and water source.

### 4.0 Bioassay Procedures

### 4.1 Mortality Phase

The treated cotton plants were sprayed and left to dry in the spray laboratory prior to the removal of leaves to make each test arena, and the transfer of *Orius.* Bioassay test arenas were setup on Day 0 (application day) and also at 3, 7 and 14 DAT (days after treatment).

Using a fine brush, five, 2-4 day old *O.laevigatus* nymphs were transferred onto each arena. Approximately 1 mg of *Ephestia* eggs was added to each arena and this was replenished after 48 hours. The *Orius* were exposed to the treated arenas for 72 hours before disposal.

### 4.2 Observations

For the mortality assessments, the conditions of the *orius* were assessed under a binocular microscope conducted at 2, 24, 48 and 72 hours after insect addition, for each bioassay DAT setup. They were recorded as being:-

| | |
|---|---|
| *Alive* | Still moving |
| *Moribund* | Still twitching, but generally unable to right themselves |
| *Dead* | No longer moving |
| *Missing* | Not visible |

### 4.3 Environmental Conditions

The Study was maintained at a temperature of 25 ± 2°C, and a relative humidity of 60-90%. The lighting was 1870 - 2220 lux with a 16 hour light: 8 hour dark photoperiod for the mortality phases of the bioassay. Environmental conditions were monitored using IceSpy (Comark) electronic environmental equipment. See Appendices 1 and 2.

### 4.4 Analysis of results

The number of any missing *orius* was added to the number of dead *orius* in each treatment to derive the overall mortality. The mean percentage mortality in the individual treatments was calculated, and was then corrected for any losses in the control treatment using Abbott's formula (Abbott, 1925).

### 5 RESULTS

### 5.1 Bioassay Mortality phase

The results of the 0, 3, 7 and 14 DAT mortality assessments are given in Appendix 3 and are summarised in Tables 1 and 2 below.

**TABLE 1 MORTALITY EFFECTS OF CARNAUBA WAX AND DELTAMETHRIN ON ORIUS LAEVIGATUS (0 & 3 DAT)**

| Treatment | 0 DAT (72hr) mortality (%) | Abbott corrected mortality (%) | 3 DAT (72hr) mortality (%) | Abbott corrected mortality (%) |
|---|---|---|---|---|
| 0.1 % Tween 20 in deionised water control | 20.00 | - | 10.00 | - |
| Carnauba Wax: 0.76g ha | 67.50 | 59.38 | 72.50 | 69.44 |

**TABLE 2 MORTALITY EFFECTS OF CARNAUBA WAX AND DELTAMETHRIN ON ORIUS LAEVIGATUS (7 & 14 DAT)**

| Treatment | 7 DAT (72hr) mortality (%) | Abbott corrected mortality (%) | 14 DAT (72hr) mortality (%) | Abbott corrected mortality (%) |
|---|---|---|---|---|
| 0.1 % Tween 20 in deionised water control | 32.50 | - | 10.00 | - |
| Carnauba Wax: 0.76g ha | 47.50 | 22.22 | 35.00 | 27.78 |

Carnauba wax, at the rate of 0.76 g/ha had a statistically significant effect (P>0.01) on the mortality of the *orius* compared to the control. The 7 DAT bioassay results showed carnauba wax, at the rate of 0.76 g/ha had no statistically significant effect (P>0.01) on the mortality of the *orius* compared to the control.

### CONCLUSIONS

Carnauba wax, at the rate of 0.76 g/ha had a statistically significant effect (P>0.01) on the mortality of the *Orius* compared to the control.

Carnauba wax, at the rate of 0.76 g/ha had no statistically significant effect (P>0.01) on the mortality of the *Orius* compared to the control.

### Appendix 3: Mortality Assessments - 0 DAT Bioassay

The table below gives the number of *Orius* alive at 72 hrs for 0 DAT assessments and the number of dead *Orius.*

| Treatment | Rep | Alive | Moribund | Dead | Missing | % M | Mean % M | Abbott corrected mean % mortality |
|---|---|---|---|---|---|---|---|---|
| Control | 1 | 5 | 0 | 0 | 0 | 0 | 20.00 | - |
| | 2 | 4 | 0 | 1 | 0 | 20 | | |
| | 3 | 5 | 0 | 0 | 0 | 0 | | |
| | 4 | 4 | 0 | 1 | 0 | 20 | | |
| | 5 | 3 | 0 | 2 | 0 | 40 | | |
| | 6 | 3 | 1 | 1 | 0 | 40 | | |
| | 7 | 4 | 0 | 1 | 0 | 20 | | |
| | 8 | 4 | 0 | 0 | 1 | 20 | | |
| Carnauba Wax: 0.76 g/ha | 1 | 1 | 0 | 4 | 0 | 80 | 70.00 | 62.50 |
| | 2 | 2 | 0 | 3 | 0 | 60 | | |
| | 3 | 2 | 0 | 2 | 1 | 60 | | |
| | 4 | 3 | 0 | 2 | 0 | 40 | | |
| | 5 | 0 | 0 | 5 | 0 | 100 | | |
| | 6 | 3 | 0 | 2 | 0 | 40 | | |
| | 7 | 0 | 0 | 4 | 1 | 100 | | |
| | 8 | 1 | 0 | 2 | 2 | 80 | | |
| Key: | M = mortality | | | | | | | |

Note: "missing" orius were assumed to have died and are included in mortality calculations.

### Appendix 4: Mortality Assessments - 3 DAT Bioassay.

The table below gives the number of *Orius* alive at 72 hrs for 3 DAT assessments and the number of dead *Orius.*

| Treatment | Rep | Alive | Moribund | Dead | Missing | % M | Mean % M | Abbott corrected mean % mortality |
|---|---|---|---|---|---|---|---|---|
| Control | 1 | 5 | 0 | 0 | 0 | 0 | 10.00 | - |
| | 2 | 5 | 0 | 0 | 0 | 0 | | |
| | 3 | 4 | 0 | 0 | 1 | 20 | | |
| | 4 | 4 | 0 | 1 | 0 | 20 | | |
| | 5 | 4 | 0 | 1 | 0 | 20 | | |
| | 6 | 4 | 0 | 1 | 0 | 20 | | |
| | 7 | 5 | 0 | 0 | 0 | 0 | | |
| | 8 | 5 | 0 | 0 | 0 | 0 | | |
| Carnauba wax: 0.76 g/ha | 1 | 1 | 1 | 3 | 0 | 80 | 72.50 | 69.44 |
| | 2 | 3 | 0 | 1 | 1 | 40 | | |
| | 3 | 1 | 1 | 3 | 0 | 80 | | |
| | 4 | 0 | 0 | 4 | 1 | 100 | | |
| | 5 | 1 | 0 | 4 | 0 | 80 | | |
| | 6 | 1 | 0 | 3 | 1 | 80 | | |
| | 7 | 2 | 0 | 3 | 0 | 60 | | |
| | 8 | 2 | 1 | 2 | 0 | 60 | | |
| Key: | M = mortality | | | | | | | |

| | | | | | | | | |
|---|---|---|---|---|---|---|---|---|
| Note: "missing" orius were assumed to have died and are included in mortality calculations. | | | | | | | | |

### Appendix 5: Mortality Assessments - 7 DAT Bioassay

The table below gives the number of *Orius* alive at 72 hrs for 7 DAT assessments and the number of dead *Orius.*

| Treatment | Rep | Alive | Moribund | Dead | Missing | % M | Mean %M | Abbott corrected mean % mortality |
|---|---|---|---|---|---|---|---|---|
| Control | 1 | 2 | 0 | 3 | 0 | 60 | 32.50 | - |
| | 2 | 4 | 0 | 0 | 1 | 20 | | |
| | 3 | 5 | 0 | 0 | 0 | 0 | | |
| | 4 | 2 | 0 | 3 | 0 | 60 | | |
| | 5 | 5 | 0 | 0 | 0 | 0 | | |
| | 6 | 4 | 0 | 1 | 0 | 20 | | |
| | 7 | 3 | 0 | 2 | 0 | 40 | | |
| | 8 | 2 | 0 | 3 | 0 | 60 | | |
| Carnauba wax: 0.76 g/ha | 1 | 3 | 0 | 0 | 2 | 40 | 47.50 | 22.22 |
| | 2 | 3 | 0 | 2 | 0 | 40 | | |
| | 3 | 2 | 0 | 3 | 0 | 60 | | |
| | 4 | 3 | 0 | 2 | 0 | 40 | | |
| | 5 | 2 | 0 | 1 | 2 | 60 | | |
| | 6 | 3 | 0 | 0 | 2 | 40 | | |
| | 7 | 2 | 0 | 0 | 3 | 60 | | |
| | 8 | 3 | 0 | 1 | 1 | 40 | | |
| Key: | M = mortality | | | | | | | |
| | Mv = Missing value | | | | | | | |

| | | | | | | | | |
|---|---|---|---|---|---|---|---|---|
| Note: "missing" orius were assumed to have died and are included in mortality calculations. | | | | | | | | |

### Appendix 6: Mortality Assessments -14 DAT Bioassay

The table below gives the number of *Orius* alive at 72 hrs for 14 DAT assessments and the number of dead *Orius.*

| Treatment | Rep | Alive | Moribund | Dead | Missing | % M | Mean % M | Abbott corrected mean % mortality |
|---|---|---|---|---|---|---|---|---|
| Control | 1 | 5 | 0 | 0 | 0 | 0 | 10.00 | - |
| | 2 | 5 | | 0 | 0 | 0 | | |
| | 3 | 4 | 0 | 1 | 0 | 20 | | |
| | 4 | 4 | 0 | 1 | 0 | 20 | | |
| | 5 | 4 | 0 | 0 | 1 | 20 | | |
| | 6 | 5 | | 0 | 0 | 0 | | |
| | 7 | 5 | 0 | 0 | 0 | 0 | | |
| | 8 | 4 | 0 | 1 | 0 | 20 | | |
| Carnauba wax: 0.76 g/ha | 1 | 3 | 0 | 1 | 1 | 40 | 35.00 | 27.78 |
| | 2 | 3 | 0 | 2 | 0 | 40 | | |
| | 3 | 3 | 0 | 2 | 0 | 40 | | |
| | 4 | 1 | 0 | 4 | 0 | 80 | | |
| | 5 | 4 | 0 | 1 | 0 | 20 | | |
| | 6 | 4 | 0 | 1 | 0 | 20 | | |
| | 7 | 4 | 0 | 1 | 0 | 20 | | |
| | 8 | 4 | 0 | 1 | 0 | 20 | | |
| Key: | M = mortality | | | | | | | |

| | | | | | | | | |
|---|---|---|---|---|---|---|---|---|
| Note: "missing" orius were assumed to have died and are included in mortality calculations. | | | | | | | | |

## Claims

1. A liquid formulation for controlling arthropod infestation that comprises:
i) electret particles selected from carnauba wax, beeswax, Chinese wax, shellac wax, spermaceti wax, candelilla wax, castor wax, ouricury wax and rice bran wax and having a volume mean diameter of 10 to 40 µm and capable of adhering to eukaryote tissue, the particles being suspended within a liquid of the liquid formulation;
ii) encapsulated within and dispersed on the surface of the electret particles at least one chemical agent that has activity on arthropods; and
iii) a surfactant.

2. A liquid formulation as claimed in claim 1, the formulation being selected from an aqueous formulation and an oleaginous formulation.

3. A liquid formulation according to claim 1 or claim 2, wherein the at least one active chemical agent is selected from an arthropodicidal chemical and an arthropod pheromone.

4. A liquid formulation according to any one of the preceding claims, wherein the electret particles have a volume mean diameter of 10 to 30 µm.

5. A liquid formulation according to any one of the preceding claims, wherein the at least one chemical agent is effective against infesting arthropods of social insects of economic importance to man, infesting arthropods of species of use in the manufacture of clothing material, arthropods that infest crop and ornamental plants or arthropods that infest domestic and farm animals.

6. A liquid formulation according to claim 5, wherein the at least one chemical agent is selected from pyrethroids, organophosphates, carbamates, spinosans, GABA inhibitors, neonicotinoids, anthranilamides, formononetins, essential oils and insect growth regulators.

7. A liquid formulation according to claim 6, wherein the at least one chemical agent is effective against infesting arthropods of bees.

8. A liquid formulation according to claim 6, wherein the at least one chemical agent is effective against infesting arthropods of silkworm moth.

9. A liquid formulation according to claim 6, wherein the at least one chemical agent is selected from α-cypermethrin, λ-cyhalothrin, [cyano-(3-phenoxyphenyl)-methyl] 3-(2,2-dibromoethenyl)-2,2-dimethyl-cyc)opropane-1-carboxytate (deltamethrin), and τ-fluvalinate, chlorpyriphos (diethoxy-sulfanylidene-(3,5,6-trichloropyridin-2-yl)oxy-I^{5}-phosphane), malathion (diethyl 2 dimethoxyphosphinothioyl-sulfanylbutanedioate), coumaphos (3-chloro-7-diethoxyphosphinothioyloxy-4-methylcoumarin), and stirifos ([(E)-2-chloro-1-(2,4,5-trichlorophenyl)ethenyl] dimethyl phosphate), spinosad, fipronil (5-amino-1-[2,6-dichloro-4-(trifluoromethyl)phenyl]-4 (trifluoromethylsulfinyl) pyrazole-3-carbonitrile), imidacloprid (*N*-[1-[(6-Chloro-3-pyridyl)methyl]-4,5-dihydroimidazol-2-yljnitramide), 7-Hydroxy -3-(4-methoxyphenyl) chromone, tea tree oil, thyme oil, menthol, and methoxyfenozide (*N*-*tert-*butyl-*N*'-(3-methoxy-o-toluoyl)-3,5-xylohydrazide).

10. A liquid formulation according to claim 9, wherein the at least one chemical agent is selected from thyme oil and deltamethrin.

11. A liquid formulation according to claim 5, wherein the arthropodicidal chemical is amitraz (N-(2,4-dimethylphenyl)-N-[(2,4-dimethylphenyl)iminomethyl]-N-methylmethanimidamide).

12. A liquid formulation according to any one of the preceding claims, wherein the eukaryotic tissue is selected from leaves, stems, fruiting bodies and flowers, from animal tissue selected from skin, hair, fur, horns, feathers, nails, claws and beaks, and from arthropod tissue selected from the arthropod cuticle including exoskeleton parts selected from the head, thorax, abdomen, legs, wings and feet (tarsi).

13. Use of electret particles in the manufacture of a liquid formulation according to any one of the preceding claims.

14. A process for producing electret particles usable in a liquid formulation according to any one of claims 1 to 12, comprising the steps of:
i) adding at least one chemical agent selected from an arthropodicidal chemical and an arthropod pheromone to electret particles;
ii) fusing the chemical agent loaded particles of i) together to form a solid matrix;
iii) treating the solid matrix of ii) to form millimetre-sized particles suitable for milling; and
iv) milling the particles of iii) to form particles having a volume mean diameter of from 10 to 40 µm.

15. A process according to claim 14, comprising the further steps of adding a flow agent to the milled particles.

16. A process for producing electret particles usable in a liquid formulation according to any one of claims 1 to 12, comprising the steps of:
i) independently spraying liquid electret forming materials and at least one liquid chemical agent into a collecting chamber;
ii) cooling the chamber to a temperature at which the electret material solidifies or begins to solidify; and
iii) forming particles of chemical agent loaded electret material having a volume mean diameter in the range of from 10 to 15 µm.

## Patentansprüche

1. Flüssige Formulierung für die Bekämpfung von Arthropodenbefall, die Folgendes umfasst:
i) Elektretpartikel, ausgewählt aus Carnaubawachs, Bienenwachs, chinesischem Wachs, Schellackwachs, Walratwachs, Candelillawachs, Rizinuswachs, Ouricuriwachs und Reiskleiewachs, die einen volumenmittleren Durchmesser von 10 bis 40 µm aufweisen und zum Haften an Eukaryontengewebe fähig sind, wobei die Partikel in einer Flüssigkeit der flüssigen Formulierung suspendiert sind;
ii) mindestens ein chemisches Agens mit Wirkung auf Arthropoden, das innerhalb der Elektretpartikel verkapselt und auf deren Oberfläche dispergiert ist; und
iii) ein Tensid.

2. Flüssige Formulierung nach Anspruch 1, wobei die Formulierung aus einer wässrigen Formulierung und einer öligen Formulierung ausgewählt ist.

3. Flüssige Formulierung nach Anspruch 1 oder Anspruch 2, wobei das mindestens eine chemische Agens aus einer arthropodiziden Chemikalie und einem Arthropodenpheromon ausgewählt ist.

4. Flüssige Formulierung nach einem der vorhergehenden Ansprüche, wobei die Elektretpartikel einen volumenmittleren Durchmesser von 10 bis 30 µm aufweisen.

5. Flüssige Formulierung nach einem der vorhergehenden Ansprüche, wobei das mindestens eine chemische Agens gegen Arthropoden, die soziale Insekten mit Bedeutung für den Menschen befallen, Arthropoden, die Spezies, die in der Herstellung von Bekleidungsmaterial von Nutzen sind, befallen, Arthropoden, die Kulturpflanzen und Zierpflanzen befallen, oder Arthropoden, die Haustiere und Nutztiere befallen, wirksam ist.

6. Flüssige Formulierung nach Anspruch 5, wobei das mindestens eine chemische Agens aus Pyrethroiden, Organophosphaten, Carbamaten, Spinosanen, GABA-Hemmern, Neonikotinoiden, Anthranilamiden, Formononetinen, ätherischen Ölen und Insektenwachstumsregulatoren ausgewählt ist.

7. Flüssige Formulierung nach Anspruch 6, wobei das mindestens eine chemische Agens gegen Arthropoden, die Bienen befallen, wirksam ist.

8. Flüssige Formulierung nach Anspruch 6, wobei das mindestens eine chemische Agens gegen Arthropoden, die den Seidenspinner befallen, wirksam ist.

9. Flüssige Formulierung nach Anspruch 6, wobei das mindestens eine chemische Agens aus α-Cypermethrin, A-Cyhalothrin, [Cyano-(3-Phenoxyphenyl)methyl]-3-(2,2-dibromethenyl)-2,2-dimethylcyclopropan-1-carboxylat (Deltamethrin) und τ-Fluvalinat, Chlorpyriphos (Diethoxysulfanyliden-(3,5,6-trichlorpyridin-2-yl)oxy-I^{5}-phosphan), Malathion (Diethyl-2-dimethoxyphosphinothioylsulfanylbutandioat), Coumaphos (3-Chlor-7-diethoxyphosphinothioyloxy-4-methylcoumarin) und Stirifos ([(E)-2-Chlor-1-(2,4,5-trichlorphenyl)ethenyl]dimethylphosphat), Spinosad, Fipronil (5-Amino-1-[2,6-dichlor-4-(trifluormethyl)phenyl]-4-(trifluormethylsulfinyl)pyrazol-3-carbonitril), Imidacloprid (*N*-[1-[(6-Chlor-3-pyridyl)methyl]-4,5-dihydroimidazol-2-yl]nitramid), 7-Hydroxy-3-(4-methoxyphenyl)chromon, Teebaumöl, Thymianöl, Menthol und Methoxyfenozid (*N*-*tert*.-Butyl-N'-(3-methoxy-o-toluoyl)-3,5-xylohydrazid) ausgewählt ist.

10. Flüssige Formulierung nach Anspruch 9, wobei das mindestens eine chemische Agens aus Thymianöl und Deltamethrin ausgewählt ist.

11. Flüssige Formulierung nach Anspruch 5, wobei es sich bei der arthropodiziden Chemikalie um Amitraz (N-(2,4-Dimethylphenyl)-N-[(2,4-dimethylphenyl)iminomethyl]-N-methylmethanimidamid) handelt.

12. Flüssige Formulierung nach einem der vorhergehenden Ansprüche, wobei das eukaryontische Gewebe aus Blättern, Stängeln, Fruchtkörpern und Blüten, aus tierischem Gewebe, ausgewählt aus Haut, Haar, Pelz, Hörnern, Federn, Nägeln, Klauen und Schnäbeln und aus Arthropodengewebe, ausgewählt aus der Arthropodenkutikula, einschließlich Außenskelettteilen, ausgewählt aus Kopf, Thorax, Abdomen, Beinen, Flügeln und Tarsi, ausgewählt ist.

13. Verwendung von Elektretpartikeln in der Herstellung einer flüssigen Formulierung nach einem der vorhergehenden Ansprüche.

14. Verfahren zur Herstellung von Elektretpartikeln, die in einer flüssigen Formulierung nach einem der Ansprüche 1 bis 12 verwendet werden können, umfassend die folgenden Schritte:
i) Hinzufügen von mindestens einem chemischen Agens, ausgewählt aus einer arthropodiziden Chemikalie und einem Arthropodenpheromon, zu Elektretpartikeln;
ii) Miteinanderfusionieren der mit dem chemischen Agens beladenen Partikel von i), um eine feste Matrix zu bilden,
iii) Behandeln der festen Matrix von ii), um millimetergroße Partikel, die sich für das Vermahlen eignen, zu bilden; und
iv) Vermahlen der Partikel von iii), um Partikel mit einem volumenmittleren Durchmesser von 10 bis 40 µm zu bilden.

15. Verfahren nach Anspruch 14, das die weiteren Schritte des Hinzufügens eines Flussmittels zu den vermahlenen Partikeln umfasst.

16. Verfahren zur Herstellung von Elektretpartikeln, die in einer flüssigen Formulierung nach einem der Ansprüche 1 bis 12 verwendet werden können, umfassend die folgenden Schritte:
i) unabhängiges Versprühen von flüssigen elektretbildenden Materialien und von mindestens einem flüssigen chemischen Agens in eine Sammelkammer;
ii) Abkühlen der Kammer auf eine Temperatur, bei der sich das Elektretmaterial verfestigt bzw. zu verfestigen beginnt; und
iii) Bilden von Partikeln von mit chemischem Agens beladenem Elektretmaterial mit einem volumenmittleren Durchmesser im Bereich von 10 bis 15 µm.

## Revendications

1. Formulation liquide destinée à contrôler une infestation par des arthropodes, comprenant :
i) des particules d'électret choisies parmi la cire de carnauba, la cire d'abeille, la cire de Chine, la cire de gomme-laque, le spermaceti, la cire de candelilla, l'huile de ricin hydrogénée, la cire d'Ouricuri et la cire de son de riz, et ayant un diamètre moyen en volume allant de 10 à 40 µm, et capable d'adhérer à un tissu eucaryote, les particules étant mises en suspension au sein d'un liquide de la formulation liquide ;
ii) encapsulé au sein des particules d'électret, et dispersé à leur surface, au moins un agent chimique ayant une activité sur les arthropodes ; et
iii) un agent tensioactif.

2. Formulation liquide selon la revendication 1, la formulation étant choisie parmi une formulation aqueuse et une formulation oléagineuse.

3. Formulation liquide selon la revendication 1 ou la revendication 2, dans laquelle le au moins un agent chimique actif est choisi parmi une substance chimique arthropodicide et une phéromone d'arthropodes.

4. Formulation liquide selon l'une quelconque des revendications précédentes, dans laquelle les particules d'électret ont un diamètre moyen en volume allant de 10 à 30 µm.

5. Formulation liquide selon l'une quelconque des revendications précédentes, dans laquelle le au moins un agent chimique est efficace contre les arthropodes infestant les insectes sociaux ayant une importance économique pour l'homme, les arthropodes infestant des espèces destinées à une utilisation dans la fabrication de matériaux pour vêtements, les arthropodes qui infestent des plantes de culture et ornementales ou les arthropodes qui infestent les animaux domestiques et d'élevage.

6. Formulation liquide selon la revendication 5, dans laquelle le au moins un agent chimique est choisi parmi les pyréthrinoïdes, les composés organophosphorés, les carbamates, les spinosans, les inhibiteurs de GABA, les néonicotinoïdes, les anthranilamides, les formononétines, les huiles essentielles et les régulateurs de la croissance des insectes.

7. Formulation liquide selon la revendication 6, dans laquelle le au moins un agent chimique est efficace contre les arthropodes infestant les abeilles.

8. Formulation liquide selon la revendication 6, dans laquelle le au moins un agent chimique est efficace contre les arthropodes infestant les vers à soie.

9. Formulation liquide selon la revendication 6, dans laquelle le au moins un agent chimique est choisi parmi l'α-cyperméthrine, la λ-cyhalothrine, le 3-(2,2-dibromoéthényl)-2,2-diméthylcyclopropane-1-carboxylate de [cyano-(3-phénoxyphényl)méthyl] (deltaméthrine), et le τ-fluvalinate, le chlorpyrifos (diéthoxy-sulfanylidène-(3,5,6-trichloropyridin-2-yl)oxy-l^{5}- phosphane), le malathion (2-diméthoxyphosphinothioyl-sulfanylbutanedioate de diéthyle), le coumaphos (3-chloro-7-diéthoxyphosphinothioyloxy-4-méthylcoumarine), et le stirifos (phosphate de [(E)-2-chloro-1-(2,4,5-trichlorophényl)éthényl)diméthyle), le spinosad, le fipronil (5-amino-1-[2,6-dichloro-4-{trifluorométhyl)phényl]-4-(trifluorométhylsulfinyl)pyrazole-3-carbonitrile), l'imidacloprid (N-[1-[(6-chloro-3-pyridyl)méthyl]-4,5-dihydroimidazol-2-yl]nitramide), la 7-hydroxy-3-(4-méthoxyphényl)chromone, l'essence d'arbre à thé, l'essence de thym, le menthol, et le méthoxyfénozide (N-tertio-butyl-N'-(3-méthoxy-o-toluoyl)-3,5-xylohydrazide).

10. Formulation liquide selon la revendication 9, dans laquelle le au moins un agent chimique est choisi parmi l'essence de thym et la deltaméthrine.

11. Formulation liquide selon la revendication 5, dans laquelle la substance chimique arthropodicide est l'amitraz (N-(2,4-diméthylphényl)-N-[(2,4-diméthylphényl)iminométhyl]-N-méthylméthanimidamide).

12. Formulation liquide selon l'une quelconque des revendications précédentes, dans laquelle le tissu eucaryote est choisi parmi les feuilles, les tiges, les corps de fructification et les fleurs, parmi les tissus animaux choisis parmi la peau, les poils, la fourrure, les cornes, les plumes, les ongles, les griffes et les becs, et parmi les tissus d'arthropodes choisis parmi la cuticule d'arthropodes y compris les parties de l'exosquelette choisies parmi la tête, le thorax, l'abdomen, les pattes, les ailes et les pieds (tarses).

13. Utilisation de particules d'électret dans la fabrication d'une formulation liquide selon l'une quelconque des revendications précédentes.

14. Procédé de production de particules d'électret utilisables dans une formulation liquide selon l'une quelconque des revendications 1 à 12, comprenant les étapes :
i) d'addition aux particules d'électret d'au moins un agent chimique choisi parmi une substance chimique arthropodicide et une phéromone d'arthropodes ;
ii) de fusion des particules chargées d'agent chimique de i) ensemble afin de former une matrice solide ;
iii) de traitement de la matrice solide de ii) afin de former des particules d'une taille millimétrée convenables pour un broyage ; et
iv) de broyage des particules de iii) afin de former des particules ayant un diamètre moyen en volume allant de 10 à 40 µm.

15. Procédé selon la revendication 14, comprenant les étapes supplémentaires d'addition d'un agent d'écoulement aux particules broyées.

16. Procédé de production de particules d'électret utilisables dans une formulation liquide selon l'une quelconque des revendications 1 à 12, comprenant les étapes :
i) de pulvérisation indépendante de matériaux liquides formateurs d'électret et d'au moins un agent chimique liquide dans une chambre de collecte ;
ii) de refroidissement de la chambre jusqu'à une température à laquelle le matériau d'électret se solidifie ou commence à se solidifier ;
iii) de formation de particules de matériau d'électret chargé d'agent chimique ayant un diamètre moyen en volume dans la plage allant de 10 à 15 µm.
